# EUROPEAN PATENT SPECIFICATION

(11) **EP 4 521 551 B1**
(45) Date of publication and mention of the grant of the patent: **02.09.2026**
(21) Application number: 24765006.2
(22) Date of filing: 10.07.2024
(51) Int. Cl.: H01Q 1/24, H01Q 1/48, H04M 1/02, H01Q 1/52

(54) **ELECTRONIC DEVICE COMPRISING LATERAL ANTENNA STRUCTURE**
ELEKTRONISCHE VORRICHTUNG MIT SEITLICHER ANTENNENSTRUKTUR
DISPOSITIF ÉLECTRONIQUE COMPRENANT UNE STRUCTURE D'ANTENNE LATÉRALE

(30) Priority: 19.07.2023 KR 20230094013; 25.08.2023 KR 20230112038
(43) Date of publication of application: 12.03.2025
(73) Proprietor: Samsung Electronics Co., Ltd, Suwon-si, Gyeonggi-do 16677 (KR)
(72) Inventor: LIM, Hyungseok, Suwon-si Gyeonggi-do 16677 (KR)
(74) Representative: Nederlandsch Octrooibureau
(86) International application number: PCT/KR2024/009873
(87) International publication number: WO 2025/018690

(56) References cited:
- KR-A- 20160 021 732
- KR-A- 20160 067 541
- KR-A- 20170 073 964
- KR-A- 20170 111 484
- KR-A- 20200 012 550
- US-A1- 2014 253 392
- US-A1- 2016 360 015
- US-A1- 2018 090 821

## Description

### [Technical Field]

Various embodiments disclosed herein relate to an electronic device including a side antenna structure.

### [Background Art]

Due to the design trend of electronic devices, demand for electronic devices with a metal for appearance is increasing.

In the case of an electronic device having a metal side surface member as an exterior, arranging antennas inside the side surface member may be limited. In order to overcome this, a method of implementing an antenna and securing radiation performance by using at least a portion of the metal side surface member as a radiator of the antenna has been applied.

US 2018/090821 A1, US 2014/253392 A1 and US 2016/360015 A1 relate to electronic devices comprising a capacitive component connected to the housing.

Meanwhile, as 5G service starts, additional service bands may be added. For this reason, electronic devices include a larger number of antenna radiators than before.

The above information may be provided as a related art for the purpose of aiding understanding of the disclosure. No claim or determination is made as to whether any of the foregoing may be applied as a prior art related to the disclosure.

### [Disclosure of Invention]

### [Technical Problem]

An electronic device may be provided with an antenna configured to transmit or receive a signal to or from an external electronic device. In the electronic device, a side surface member surrounding the side surface of the housing may be used as an antenna. In this case, the side surface member may be electrically connected to a communication module disposed on a printed circuit board. In an embodiment, the side surface member may be connected to the housing in which the printed circuit board is disposed to be electrically connected to a communication module, and may be electrically connected to a ground of the printed circuit board.

Meanwhile, the length of the side surface member may be determined considering an antenna frequency band. The side surface member may have an antenna length determined to allow communication in a defined frequency band. The antenna length may be determined by the location of the portion where a communication signal exits (a ground point or a ground) in a portion where the communication signal is fed (a power feeder). In an embodiment, the ground point of the side surface member may be a portion that is in contact with the housing connected to the ground. In this case, since the side surface member is physically connected to the housing, a current exceeding that required for antenna operation may flow into the side surface member. Therefore, antenna radiation performance through the side surface member may be deteriorated.

In addition, an oxide film may be formed on the outer surface of the side surface member to prevent corrosion of the side surface member and increase durability. When scratches occur in the oxide film due to the use of electronic devices, and current leaks from the housing to the side surface member while moisture is introduced into the scratches, hydrogen gas may be generated in the spaces between the side surface member and the oxide film, causing the oxide film layer to be separated from the side surface member.

An embodiment of the disclosure may provide a structure configured to block or reduce leakage of current from the housing to the side surface member.

The technical subjects pursued in the disclosure may not be limited to the above-mentioned technical subjects, and other technical subjects which are not mentioned may be clearly understood, through the following descriptions, by those skilled in the art to which the disclosure pertains.

The technical subjects pursued in the disclosure may not be limited to the above-mentioned technical subjects, and other technical subjects which are not mentioned may be clearly understood, through the following descriptions, by those skilled in the art to which the disclosure pertains.

### [Solution to Problem]

According to an embodiment of the disclosure, an electronic device may include a housing at least a portion of which is made of a conductive material, a side surface member which surrounds a side surface of the housing while being separated from the housing, in which the side surface member is made of a conductive material and includes a power feeder, a printed circuit board on which a communication module is disposed and which is disposed in the housing, a circuit member configured to electrically connect the power feeder of the side surface member to the printed circuit board such that a communication signal generated by the communication module is transmitted to the side surface member, and a conductive connection member configured to electrically connect the side surface member to the housing, in which the conductive connection member includes a current control element configured to control a current applied from the housing to the side surface member.

According to an embodiment of the disclosure, there is provided an antenna structure for an electronic device that includes a side surface member surrounding a side surface of a housing made of a conductive material while being separated from the housing, constituting an exterior of the electronic device, and including a side surface member with an oxide film formed on a surface thereof. The antenna structure may include the side surface member, a power feeder of the side surface member, a printed circuit board on which a communication module is disposed and which is disposed in the housing, a circuit member configured to electrically connect the power feeder of the side surface member to the printed circuit board such that a communication signal generated by the communication module is transmitted to the side surface member, and a conductive connection member configured to electrically connect the side surface member to the housing, in which the conductive connection member includes a current control element configured to control a current applied from the housing to the side surface member.

### [Advantageous Effects of Invention]

According to an embodiment of the disclosure, it is possible to control the amount of current leaking from the housing to the side surface member. For example, in an embodiment of the disclosure, the side surface member may be physically separated from a housing in an area that is used as an antenna radiator. As a result, since no current is applied from the housing to the side surface member, it is possible to ensure a certain level of antenna radiation performance through the side surface member. In addition, since no current is applied from the housing to the side surface member, even when moisture flows into the space between the side surface member and the oxide film through scratches in the oxide film formed on the outer surface of the side surface member, hydrogen gas is not generated so that the oxide film can be prevented from being separated from the side surface member.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

In connection with the description of the drawings, the same or similar components may be denoted by the same or similar reference numerals.
FIG. 1 is a block diagram of an electronic device according to an embodiment of the disclosure in a network environment.
FIGS. 2A and 2B are views illustrating a front view and a rear view of an electronic device according to various embodiments of the disclosure in an unfolded state.
FIGS. 3A and 3B are front and rear views of the electronic device according to various embodiments of the disclosure in a folded state.
FIG. 4 is an exploded perspective view of the electronic device according to various embodiments of the disclosure.
FIG. 5A is a view illustrating a state in which a conductive connection member is in contact with a side surface member and a first housing, according to an embodiment of the disclosure.
FIG. 5B is a view illustrating a state in which the conductive connection member is seated on a reinforcing member located between the side surface member and the first housing, according to an embodiment of the disclosure.
FIG. 6A is an exploded perspective view of the conductive connection member illustrated in FIG. 5A.
FIG. 6B is an enlarged view illustrating the state in which the conductive connection member illustrated in FIG. 5A is in contact with the side surface member and the first housing.
FIG. 7A is a front view of the conductive connection member illustrated in FIG. 6A.
FIG. 7B is a side view of the conductive connection member illustrated in FIG. 6A.
FIG. 7C is a rear view of the conductive connection member illustrated in FIG. 6A.
FIG. 8 is a view illustrating a state in which a conductive connection member is in contact with a side surface member and a first housing, according to an embodiment of the disclosure.
FIGS. 9A and 9B are views illustrating the configuration of the conductive connection member illustrated in FIG. 8.
FIG. 10A is a cross-sectional view taken along line A-A in FIG. 8.
FIG. 10B is a cross-sectional view taken along line B-B in FIG. 8.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

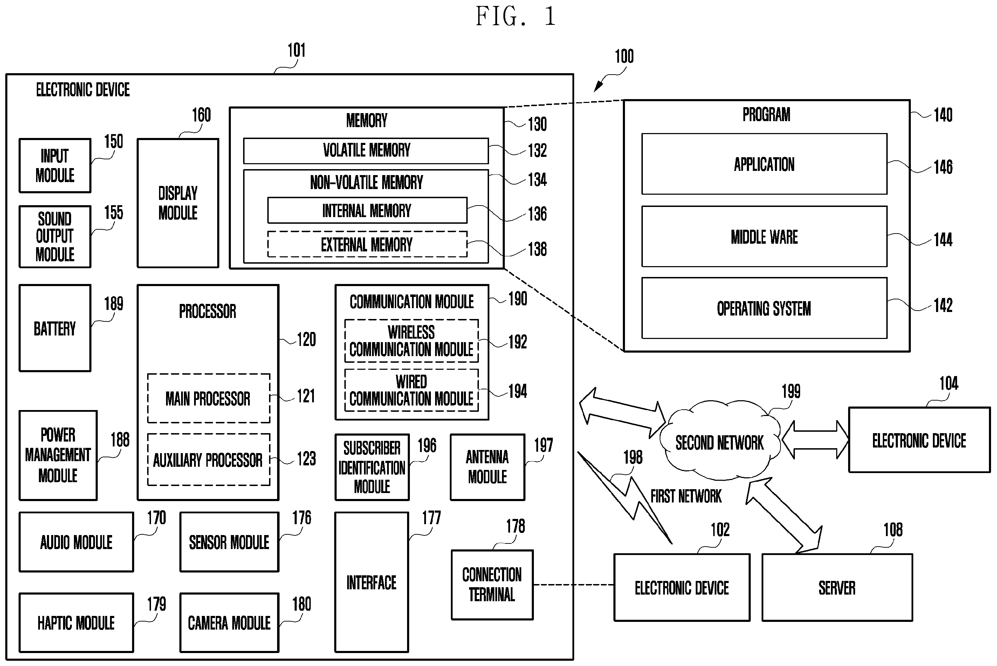

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

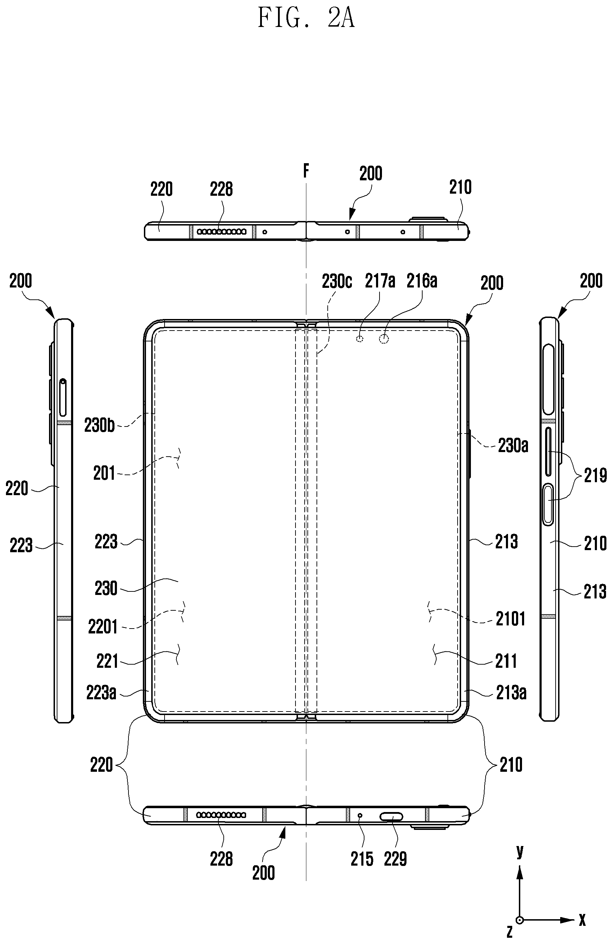

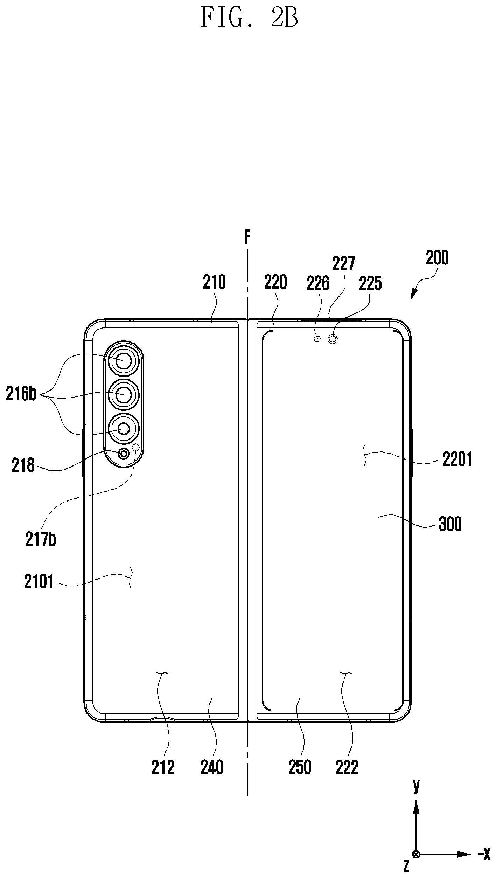

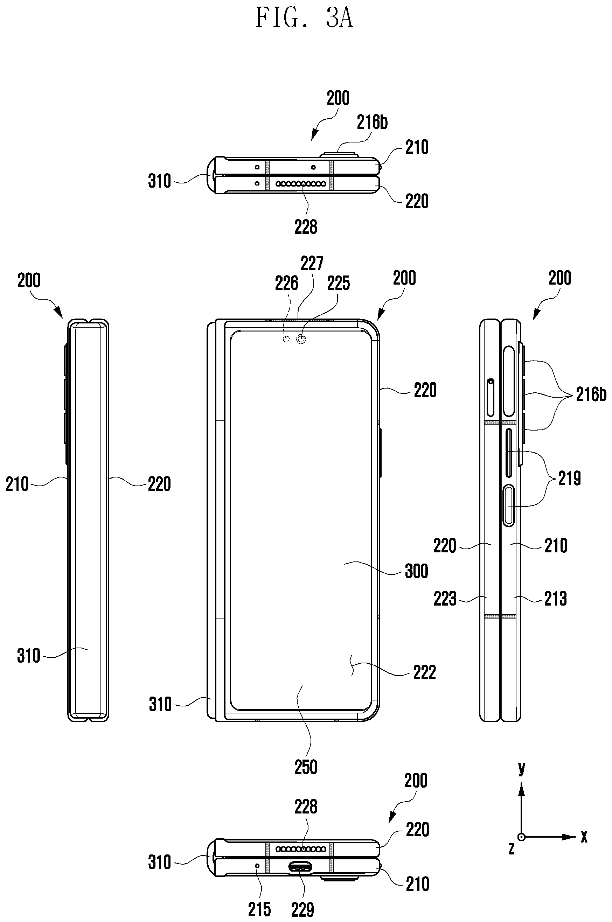

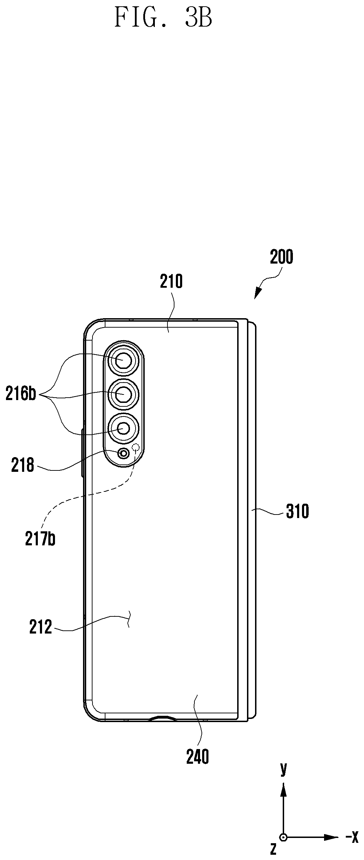

FIGS. 2A and 2B are views illustrating a front view and a rear view of an electronic device according to various embodiments of the disclosure in an unfolded state. FIGS. 3A and 3B are front and rear views of the electronic device according to various embodiments of the disclosure in a folded state.

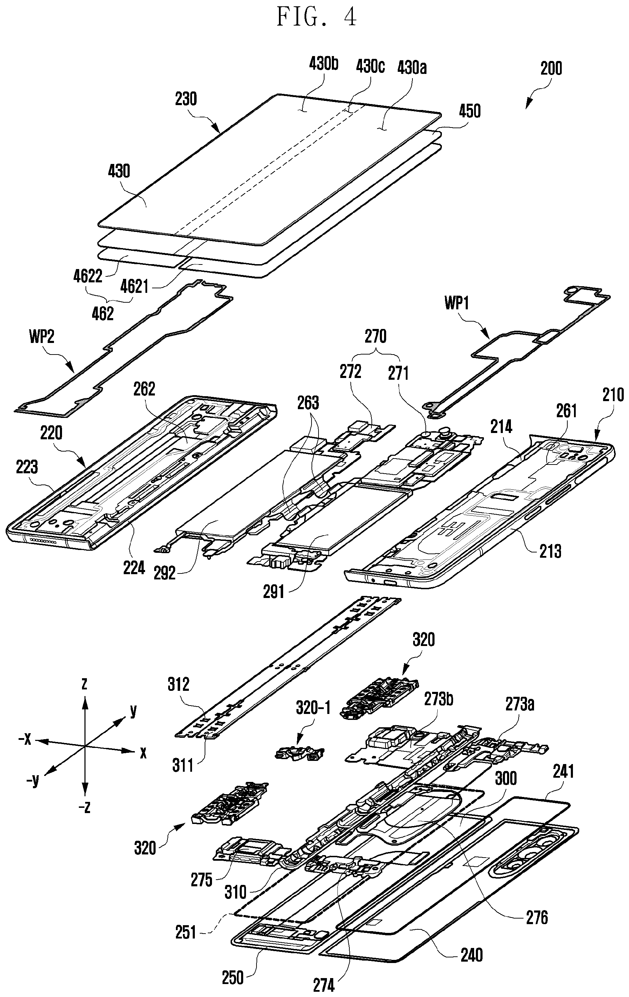

Referring to FIGS. 2A to 3B, an electronic device 200 may include a pair of housings 210 and 220 (e.g., a foldable housing structure) coupled to each other via at least one hinge device (e.g., the hinge device 320 in FIG. 4) (e.g., a hinge module or hinge structure) to be rotatable about a folding axis F with respect to each other, and a first display 230 (e.g., a flexible display, a foldable display, or a main display) disposed on both housings of the pair of housings 210 and 220 and/or a second display 300 (e.g., a sub-display) disposed on one of the pair of housing 220. According to an embodiment, the pair of housings 210 and 220 may include a first housing 210 and a second housing 220 that are disposed to be foldable with respect to each other via the at least one hinge device (e.g., the hinge device 320 in FIG. 4). In an embodiment, the at least one hinge device (e.g., the hinge device 320 in FIG. 4) may be disposed in the first housing 210 and the second housing 220 to be at least partially invisible from the outside, and may be disposed to be invisible from the outside through a hinge housing 310 (e.g., a hinge cover), which covers a foldable portion, in the unfolded state. Herein, the surface on which the first display 230 is disposed may be defined as the front surface of the electronic device 200, and the surface opposite to the front surface may be defined as the rear surface of the electronic device 200. In addition, the surface surrounding the space between the front surface and the rear surface may be defined as the side surface of the electronic device 200.

In an embodiment, the pair of housings 210 and 220 are not limited to the shape and assembly illustrated in FIGS. 2A to 3B, but may be implemented by other shapes or other combinations and/or assemblies of components. In an embodiment, the first housing 210 and the second housing 220 may be disposed on opposite sides of the folding axis F, may have shapes that are generally symmetrical to each other with respect to the folding axis F, and may be folded to match each other. According to some embodiments, the first housing 210 and the second housing 220 may be folded asymmetrically with respect to the folding axis F. According to an embodiment, the first housing 210 and the second housing 220 may form an angle or have a distance therebetween, which may be variable depending on whether the electronic device 200 is in the unfolded state, in the folded state, or in the intermediate state.

According to an embodiment, when the electronic device 200 is in the unfolded state, the first housing 210 may include a first surface 211 connected to the at least one hinge device (e.g., the hinge device 320 in FIG. 4) and disposed to face the front surface of the electronic device 200, a second surface 212 facing away from the first surface 211, and/or a first side surface member 213 surrounding at least a portion of a first space 2101 between the first surface 211 and the second surface 212. In an embodiment, when the electronic device 200 is in the unfolded state, the second housing 220 may include a third surface 221 connected to the at least one hinge device (e.g., the hinge device 320 in FIG. 4) and disposed to face the front surface of the electronic device 200, a fourth surface 222 facing away from the third surface 221, and/or a second side surface member 223 surrounding at least a portion of a second space 2201 between the third surface 221 and the fourth surface 222. In an embodiment, the first surface 211 may be oriented in substantially the same direction as the third surface 221 in the unfolded state and may at least partially face the third surface 221 in the folded state. In an embodiment, the electronic device 200 may include a recess 201 provided to accommodate a first display 230 through structural coupling of the first housing 210 and the second housing 220. In an embodiment, the recess 201 may have substantially the same size as the first display 230. In an embodiment, the first housing 210 may include a first protection frame 213a (e.g., a first decoration member) which is coupled to the first side surface member 213 and disposed to overlap the edges of the first display 230 when the first display 230 is viewed from above, thereby covering the edges of the first display 230 to be invisible from the outside. In an embodiment, the first protection frame 213a may be integrated with the first side surface member 213. In an embodiment, the second housing 220 may include a second protection frame 223a (e.g., a second decoration member) which is coupled to the second side surface member 223 and disposed to overlap the edges of the first display 230 when the first display 230 is viewed from above, thereby covering the edges of the first display 230 to be invisible from the outside. In an embodiment, the second protection frame 223a may be integrated with the second side surface member 223. In some embodiments, the first protection frame 213a and the second protection frame 223a may be omitted.

According to an embodiment, the hinge housing 310 (e.g., a hinge cover) may be disposed between the first housing 210 and the second housing 220 to cover a portion of the at least one hinge device (e.g., the hinge device 320 in FIG. 4). In an embodiment, the hinge housing 310 may be covered by a portion of the first housing 210 and the second housing 220 or exposed to the outside, depending on whether the electronic device 200 is in the unfolded state, the folded state, or the intermediate state. For example, when the electronic device 200 is in the unfolded state, at least a portion of the hinge housing 310 may be covered by the first housing 210 and the second housing 220 and may be disposed to be substantially invisible from the outside. In an embodiment, when the electronic device 200 is in the folded state, at least a portion of the hinge housing 310 may be disposed between the first housing 210 and the second housing 220 to be visible from the outside. In an embodiment, when the electronic device is in the intermediate state in which the first housing 210 and the second housing 220 are folded with a certain angle, the hinge housing 310 may be disposed between the first housing 210 and the second housing 220 to be at least partially visible from the outside of the electronic device 200. For example, the area of the hinge housing 310 exposed to the outside may be smaller than when the electronic device is fully folded. In an embodiment, the hinge housing 310 may include a curved surface.

According to an embodiment, when the electronic device 200 is in the unfolded state (e.g., the state in FIGS. 2A and 2B), the first housing 210 and the second housing 220 form an angle of about 180 degrees therebetween, and the first area 230a, the second area 230b, and the folding area 230c of the first display 230 may be arranged to be oriented in the same direction (e.g., the z-axis direction) while substantially forming the same plane. According to an embodiment, when the electronic device 200 is in the unfolded state, the first housing 210 may rotate by an angle of about 360 degrees with respect to the second housing 220 to be folded in the opposite direction such that the second surface 212 and the fourth surface 222 face each other (out-folding type).

According to an embodiment, when the electronic device 200 is in the folded state (e.g., the state in FIGS. 3A and 3B), the first surface 211 of the first housing 210 and the third surface 221 of the second housing 220 may be disposed to face each other. In this case, the first area 230a and the second area 230b of the first display 230 may form a narrow angle (e.g., in the range of 0 degrees to about 10 degrees) with respect to each other via the folding area 230c, and may be disposed to face each other. In an embodiment, at least a portion of the folding area 230c may be transformed into a curved shape with a predetermined curvature. In an embodiment, when the electronic device 200 is in the intermediate state, the first housing 210 and the second housing 220 may be disposed to form a certain angle therebetween. In this case, the first area 230a and the second area 230b of the first display 230 may form an angle that is greater than that that in the folded state and smaller than that in the unfolded state, and the curvature of the folding area 230c may be smaller than that in the folded state and greater than that in the unfolded state. In some embodiments, the first housing 210 and the second housing 220 may form an angle at which the first housing 210 and the second housing 220 can be stopped to form a predetermined folding angle between the folded state and the unfolded state via the at least one hinge device (e.g., the hinge device 320 in FIG. 4) (free stop function). In some embodiments, the first housing 210 and the second housing 220 may be continuously operated while being pressed in the unfolding direction and the folding direction with reference to a predetermined inflection angle via the at least one hinge device (e.g., the hinge device 320 in FIG. 4).

According to an embodiment, the electronic device 200 may include at least one of the following components: one or more displays 230 and 300, input devices 215, sound output devices 227 and 228, sensor modules 217a, 217b, and 226, camera modules 216a, 216b, and 225, key input devices 219, indicators (not illustrated), or connector ports 229 which are disposed on or in the first housing 210 and/or the second housing 220. In some embodiments, at least one of the components may be omitted from the electronic device 200 or at least one other component may be additionally included in the electronic device 200.

According to an embodiment, the one or more displays 230 and 300 may include a first display 230 (e.g., a flexible display) disposed to be supported by the first surface 211 of the first housing 210 and the third surface 221 of the second housing 220, and a second display 300 disposed in the inner space of the second housing 220 to be at least partially visible from the outside through the fourth surface 222. In some embodiments, the second display 300 may be disposed in the inner space of the first housing 210 to be visible from the outside through the second surface 212. In an embodiment, the first display 230 may be mainly used when the electronic device 200 is in the unfolded state, and the second display 300 may be mainly used when the electronic device 200 is in the folded state. In an embodiment, in the intermediate state, the electronic device 200 may be controlled such that the first display 230 and/or the second display 300 can be used based on the folding angle between the first housing 210 and the second housing 220.

According to an embodiment, the first display 230 may be placed in an accommodation space defined by the pair of housings 210 and 220. For example, the first display 230 may be disposed in a recess 201 defined by the pair of housings 210 and 220 and may be disposed to occupy substantially most of the front surface of the electronic device 200 in the unfolded state. In an embodiment, the first display 230 may include a flexible display in which at least a partial area may be transformed into a flat shape or a curved shape. In an embodiment, the first display 230 may include a first area 230a facing the first housing 210 and a second area 230b facing the second housing 220. In an embodiment, the first display 230 may include a folding area 230c including a portion of the first area 230a and a portion of the second area 230b with respect to the folding axis F. In an embodiment, at least a portion of the folding area 230c may include an area corresponding to the at least one hinge device (e.g., the hinge device 320 in FIG. 4). In an embodiment, the area division of the first display 230 is only an exemplary division by the pair of housings 210 and 220 and the at least one hinge device (e.g., the hinge device 320 in FIG. 4), and the first display 230 may display a seamless single entire screen substantially with the pair of housings 210 and 220 and the at least one hinge device (e.g., the hinge device 320 in FIG. 4). In an embodiment, the first area 230a and the second area 230b may have an overall symmetrical shape or a partially asymmetrical shape with respect to the folding area 230c.

According to an embodiment, the electronic device 200 may include a first rear surface cover 240 disposed on the second surface 212 of the first housing 210 and a second rear surface cover 250 disposed on the fourth surface 222 of the second housing 220. In some embodiments, at least a portion of the first rear surface cover 240 may be integrated with the first side surface member 213. In some embodiments, at least a portion of the second rear surface cover 250 may be integrated with the second side surface member 223. In an embodiment, at least one of the first rear surface cover 240 and the second rear surface cover 250 may be made of a substantially transparent plate (e.g., a glass plate including various coating layers, or a polymer plate) or an opaque plate. In an embodiment, the first rear surface cover 240 may be made of, for example, coated or colored glass, ceramic, polymer, metal (e.g., aluminum, stainless steel (STS), or magnesium), or an opaque plate such as a combination of two or more of these materials. In an embodiment, the second rear surface cover 250 may be made of a substantially transparent plate of, for example, glass or polymer. Accordingly, the second display 300 may be disposed in the inner space of the second housing 220 to be visible from the outside through the second rear surface cover 250.

According to an embodiment, the input devices 215 may include a microphone. In some embodiments, the input devices 215 may include a plurality of microphones disposed to detect the direction of sound. In an embodiment, the sound output devices 227 and 228 may include speakers. In an embodiment, the sound output devices 227 and 228 may include a call receiver 227 disposed through the fourth surface 222 of the second housing 220, and an external speaker 228 disposed through at least a portion of the second side surface member 223 of the second housing 220. In an embodiment, the input devices 215, the sound output devices 227 and 228, and the connector ports 229 may be disposed in the space of the first housing 210 and/or the space of the second housing 220, and may be exposed to the external environment through one or more holes provided in the first housing 210 and/or the second housing 220. In some embodiments, the holes provided in the first housing 210 and/or the second housing 220 may be commonly used for the input device 215 and the sound output devices 227 and 228. In some embodiments, the sound output devices 227 and 228 may include a speaker that operates without holes provided in the first housing 210 and/or the second housing 220 (e.g., a piezo speaker).

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. In an embodiment, the electronic device 200 may include a flash 218 located near the second camera module 216b. In an embodiment, the flash 218 may include, for example, a light-emitting diode or a xenon lamp. In an embodiment, the camera modules 216a, 216b, and 225 may each include one or more lenses, an image sensor, and/or an image signal processor. In some embodiments, at least one of the camera modules 216a, 216b, and 225 may include two or more lenses (e.g., wide-angle and telephoto lenses) and image sensors, and may be disposed together on one surface of the first housing 210 and/or the second housing 220.

According to an embodiment, the sensor modules 217a, 217b, and 226 may generate electrical signals or data values corresponding to an internal operating state or an external environmental state of the electronic device 200. In an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor modules 217a, 217b, and 226 may include at least one of a gesture sensor, a grip sensor, a color sensor, an infrared (IR) sensor, an illumination sensor, an ultrasonic sensor, an iris recognition sensor, or a distance detection sensor (e.g., a time-of-flight (TOF) sensor or a light detection and ranging (LiDAR) sensor).

According to an embodiment, the electronic device 200 may further include at least one of sensor modules (not illustrated), for example, an air pressure sensor, a magnetic sensor, a biometric sensor, a temperature sensor, a humidity sensor, or a fingerprint recognition sensor. In some embodiments, the fingerprint recognition sensor may be disposed through at least one of the first side surface member 213 of the first housing 210 and/or the second side surface member 223 of the second housing 220.

According to an embodiment, the key input devices 219 may be disposed to be exposed to the outside through the first side surface member 213 of the first housing 210. In some embodiments, the key input devices 219 may be disposed to be exposed to the outside through the second side surface member 223 of the second housing 220. In some embodiments, the electronic device 200 may not include some or all of the above-mentioned key input devices 219, and a key input device 219, which is not included, may be implemented in another form, such as a soft key, on at least one display 230 or 300. According to an embodiment, the key input devices 219 may be implemented by using a pressure sensor included in the at least one display 230 or 300.

According to an embodiment, the connector ports 229 may include a connector (e.g., a USB connector or an interface connector port module (IF module)) configured to transmit/receive power and/or data to and from an external electronic device. In some embodiments, the connector ports 229 may perform a function for transmitting/receiving an audio signal to and from the external electronic device, or may further include a separate connector port (e.g., an ear jack hole) for an audio signal transmitting/receiving function.

According to an embodiment, one or more camera modules 216a and 225 among the camera modules 216a, 216b, and 225, one or more sensor modules 217a and 226 among the sensor modules 217a, 217b, and 226, and /or an indicator may be disposed to be exposed through one or more displays 230 and 300. For example, the one or more camera modules 216a and 225, the one or more sensor modules 217a and 226, and/or the indicator may be disposed in the inner space of the one or more displays 230 and 300 below the active area (display area) of the one or more displays 230 and 300, and may be disposed to come into contact with the external environment through an opening perforated up to the cover member (e.g., the window layer (not illustrated) of the first display 230 and/or the second rear surface cover 250) or a transparent area. In an embodiment, an area in which the one or more displays 230 and 300 and the one or more camera modules 216a and 225 face each other may be provided as a transmission area with a predetermined transmittance as a portion of a content display area. In an embodiment, the transmission area may have a transmittance ranging from about 5% to about 20%. The transmission area may include an area overlapping the effective area (e.g., a view angle area) of the one or more camera modules 216a and 225 through which light captured by an image sensor to generate an image passes. For example, the transmission areas of the displays 230 and 300 may include an area having a lower pixel density than the periphery. For example, the transparent area may replace an opening. For example, the one or more camera modules 216a and 225 may include an under-display camera (UDC) or an under-panel camera (UPC). According to an embodiment, some camera modules or sensor modules 217a and 226 may be disposed to perform the functions thereof without being visually exposed through a display. For example, the areas facing the camera modules 216a and 225 and/or the sensor modules 217a and 226 disposed under the displays 230 and 300 (e.g., a display panel) have an under-display camera (UDC) structure, and may not require a perforated opening.

FIG. 4 is an exploded perspective view of the electronic device according to various embodiments of the disclosure.

Referring to FIG. 4, an electronic device 200 may include a first display 230 (e.g., a flexible display), a second display 300, at least one hinge device 400, a pair of support members 261 and 262, at least one board 270 (e.g., a printed circuit board (PCB)), a first housing 210, a second housing 220, a first rear surface cover 240, and/or a second rear surface cover 250.

According to an embodiment, the first display 230 may include a display panel 430 (e.g., a flexible display panel) and a support plate 450 disposed below the display panel 430. In an embodiment, the first display 230 may include a reinforcing plate 462 disposed below the support plate 450. In some embodiments, the reinforcing plate 462 may be omitted. In an embodiment, the display panel 430 may include a first panel area 430a corresponding to the first area (e.g., the first area 230a in FIG. 2A) of the first display 230, a second panel area 430b extending from the first panel area 430a and corresponding to the second area (e.g., the second area 230b in FIG. 2A) of the first display 230, and a third panel area 430c interconnecting the first panel area 430a and the second panel area 430b and corresponding to the folding area (e.g., the folding area 230c in FIG. 2A) of the first display 230. In an embodiment, the support plate 450 may be disposed between the display panel 430 and a pair of support members 261 and 262 and may be configured to have a material and a shape to provide a flat support structure for the first panel area 430a and the second panel area 430b and a bendable structure for supporting bendability of the third panel area 430c. In an embodiment, the support plate 450 may be formed of a conductive material (e.g., metal) or a non-conductive material (e.g., polymer or fiber reinforced plastics (FRP)). In an embodiment, the reinforcing plate 462 may include, between the support plate 450 and the pair of support members 261 and 262, a first reinforcing plate 4621 disposed to correspond to at least a portion of the first panel area 430a and the third panel area 430c, and a second reinforcing plate 4622 disposed to correspond to at least a portion of the second panel area 430b and the third panel area 430c. In an embodiment, the reinforcing plate 462 may be made of a metal material (e.g., SUS) to help reinforce a ground connection structure and rigidity for the first display 230. In some embodiments, the electronic device 200 may include a digitizer disposed below the support plate 450 in replacement for the support plate 462 or added between the support plate 450 and the reinforcing plate 462.

According to an embodiment, the second display 300 may be disposed in the space between the second housing 220 and the second rear surface cover 250. In an embodiment, the second display 300 may be disposed in the space between the second housing 220 and the second rear surface cover 250 to be visible from the outside through substantially the entire area of the second rear surface cover 250.

According to an embodiment, at least a portion of the first support member 261 may be coupled to the second support member 262 to be foldable via the at least one hinge device 320. In an embodiment, the electronic device 200 may include at least one wiring member 263 (e.g., a flexible printed circuit board (FPCB)) extending from at least a portion of the first support member 261 to a portion of the second support member 262 across the at least one hinge device 320. In an embodiment, the first support member 261 may extend from the first side surface member 213 or may be disposed in a manner of being structurally coupled with the first side surface member 213. In an embodiment, the electronic device 200 may include a first space (e.g., the first space 2101 of FIG. 2A) provided by the first support member 261 and the first rear surface cover 240. In an embodiment, the first housing 210 (e.g., a first housing structure) may be configured through the coupling of the first side surface member 213, the first support member 261, and the first rear surface cover 240. In an embodiment, the second support member 262 may extend from the second side surface member 223 or may be disposed in a manner of being structurally coupled with the second side surface member 223. In an embodiment, the electronic device 200 may include a second space (e.g., the second space 2201 in FIG. 2A) provided by the second support member 262 and the second rear surface cover 250. In an embodiment, the second housing 220 (e.g., a second housing structure) may be configured through the coupling of the second side surface member 223, the second support member 262, and the second rear surface cover 250. In an embodiment, the at least one wiring member 263 and/or the at least one hinge device 320 may be disposed to be at least partially supported by at least a portion of the pair of support members 261 and 262. In an embodiment, the at least one wiring member 263 may be disposed to extend from the first support member 261 to the second support member 262 across the folding axis F. In an embodiment, the at least one wiring member 263 may be disposed to have a length in a direction (e.g., the x-axis direction) substantially perpendicular to the folding axis (e.g., the y-axis or the folding axis F of FIG. 2A).

According to an embodiment, the one or more boards 270 may include a first board 271 disposed in the first space 2101 and a second board 272 disposed in the second space 2201. In an embodiment, the first board 271 and the second board 272 may include a plurality of electronic components arranged to implement various functions of the electronic device 200. In an embodiment, the first board 271 and the second board 272 may be electrically connected to each other via the at least one wiring member 263.

According to an embodiment, the electronic device 200 may include one or more batteries 291 and 292. In an embodiment, the one or more batteries 291 and 292 may include a first battery 291 disposed in the first space 2101 of the first housing 210 and electrically connected to the first board 271 and a second battery disposed in the second space 2201 of the second housing 220 and electrically connected to the second board 272. In an embodiment, the first support member 261 and the second support member 262 may further include one or more swelling holes for the first battery 291 and the second battery 292.

According to an embodiment, the first housing 210 may include a first rotation support surface 214, and the second housing 220 may include a second rotation support surface 224 corresponding to the first rotation support surface 214. In an embodiment, the first rotation support surface 214 and the second rotation support surface 224 may each include a curved surface corresponding to (naturally connected to) the curved outer surface of the hinge housing 310. In an embodiment, when the electronic device 200 is in the unfolded state, the first rotation support surface 214 and the second rotation support surface 224 may cover the hinge housing 310 to prevent the hinge housing 310 from being exposed to the rear surface of the electronic device 200 or to expose only a portion of the hinge housing 310 to the rear surface of the electronic device 200. In an embodiment, when the electronic device 200 is in the folded state, the first rotation support surface 214 and the second rotation support surface 224 may rotate along the curved outer surface of the hinge housing 310 to at least partially expose the hinge housing 310 to the rear surface of the electronic device 200.

According to an embodiment, the electronic device 200 may include at least one antenna 276 disposed in the first space 2201. In an embodiment, the at least one antenna 276 may be disposed on the first battery 291 and the first rear surface cover 240 in the first space 2201. In an embodiment, the at least one antenna 276 may include, for example, a near-field communication (NFC) antenna, a wireless charging antenna, and/or a magnetic secure transmission (MST) antenna. In an embodiment, the at least one antenna 276 may execute, for example, short-range communication with an external device or wireless transmission/reception of power required for charging. In some embodiments, an antenna structure may be configured by at least a portion of the first side surface member 213 or the second side surface member 223 and/or a portion of the first support member 261 and the second support member 262 or a combination thereof.

According to an embodiment, the electronic device 200 may further include one or more electronic component assemblies 274 and 275 and/or additional support members 263 and 273 disposed in the first space (e.g., the first space 2101 in FIG. 2A) and/or the second space (e.g., the second space 2201 in FIG. 2A). For example, the one or more electronic component assemblies may include an interface connector port assembly 274 or a speaker assembly 275.

According to an embodiment, the electronic device 200 may include a first waterproof member WP1 disposed between the first reinforcing plate 4621 and the first support member 261 and a second waterproof member WP2 disposed between the second reinforcing plate 4622 and the second support member 262. In an embodiment, the first waterproof member WP1 may provide at least one first waterproof space between the first reinforcing plate 4621 and the first support member 261. In an embodiment, the at least one first waterproof space may accommodate an area corresponding to at least one electronic component (e.g., a camera module or a sensor module) disposed to be supported by the first support member 261. In an embodiment, the second waterproof member WP2 may provide a second waterproof space between the second reinforcing plate 4622 and the second support member 262. In an embodiment, the second waterproof space may accommodate at least a portion of the bending portion (e.g., a chip-on-plastic (COP)) folded to the rear surface of the first display 230.

According to an embodiment, the electronic device 200 may include waterproof tape 241 disposed between the first rear surface cover 240 and the first housing 210. In an embodiment, the electronic device 200 may include a bonding member 251 disposed between the second rear surface cover 250 and the second housing 220. In some embodiments, the bonding member 251 may be disposed between the second display 300 and the second housing 220. In some embodiments, the waterproof tape 241 may be replaced with the bonding member 251, and the bonding member 251 may be replaced with the waterproof tape 241.

According to an embodiment, the at least one hinge device 320 may include a pair of hinge devices 320 disposed at opposite ends thereof in a direction parallel to the folding axis F. In some embodiments, three or more hinge devices 320 may be arranged at a predetermined interval along the folding axis F, or one hinge device 320 may be arranged along the folding axis F1. In an embodiment, the electronic device 200 may include a connection module 320-1 disposed between the hinge devices 320. In an embodiment, the connection module 320-1 may be disposed through a combination of one or more gears and/or a combination of one or more links. In some embodiments, the connection module 320-1 may be replaced with the hinge devices 320. In an embodiment, the electronic device 200 may include a first hinge plate 311 and a second hinge plate 312 connected via the at least one hinge device 320. In an embodiment, in the unfolded state, the first hinge plate 311 may form the same plane as the first housing 210, and, in the unfolded state, the second hinge plate 312 may form the same plane as the second housing 220. According to an embodiment, the flexible display 230 may be transformed into a waterdrop shape and accommodated in the inner space of the electronic device 200 through the at least one hinge device 320 or 320-1 when the electronic device 200 is in the folded state. According to an embodiment, in the folded state, the first hinge plate 311 and the second hinge plate 312 may be moved to support at least a portion of the transformed waterdrop-shaped folding area (e.g., the folding area 230C in FIG. 2A) of the flexible display 230, and in the folded state, the first housing 210 and the second housing 220 may be moved to support untransformed flat portions (e.g., the first area 230a and the second area 230b of FIG. 2A) of the flexible display 230. Accordingly, in the folded state, the first hinge plate 311 may not form the same plane as the first housing 210 and the second hinge plate 312 may not form the same plane as the second housing 220. According to an embodiment of the disclosure, the at least one hinge device 320 or 320-1 may guide the folding area 230c to be transformed into a predetermined shape (e.g., a waterdrop shape) when the flexible display 230 is in the folded state.

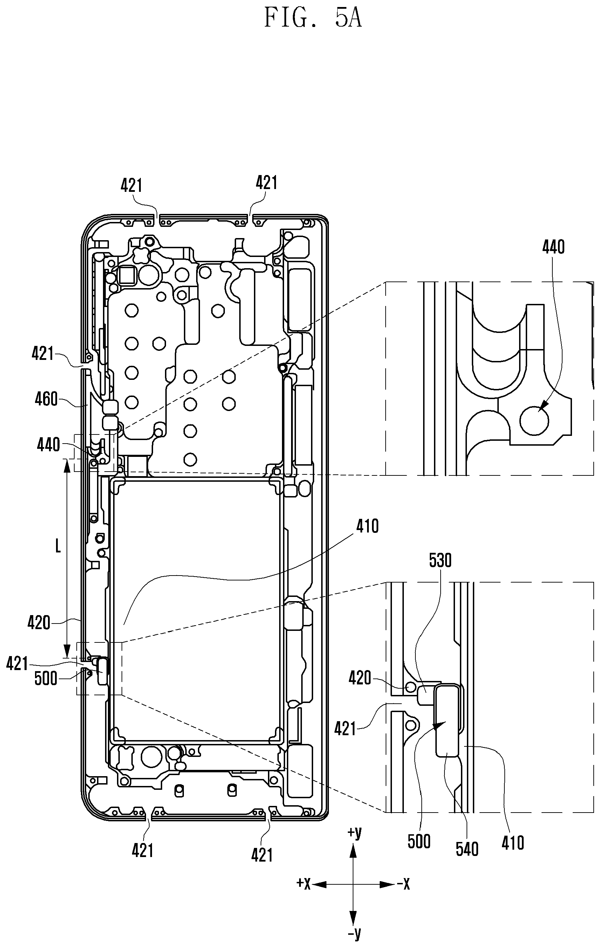

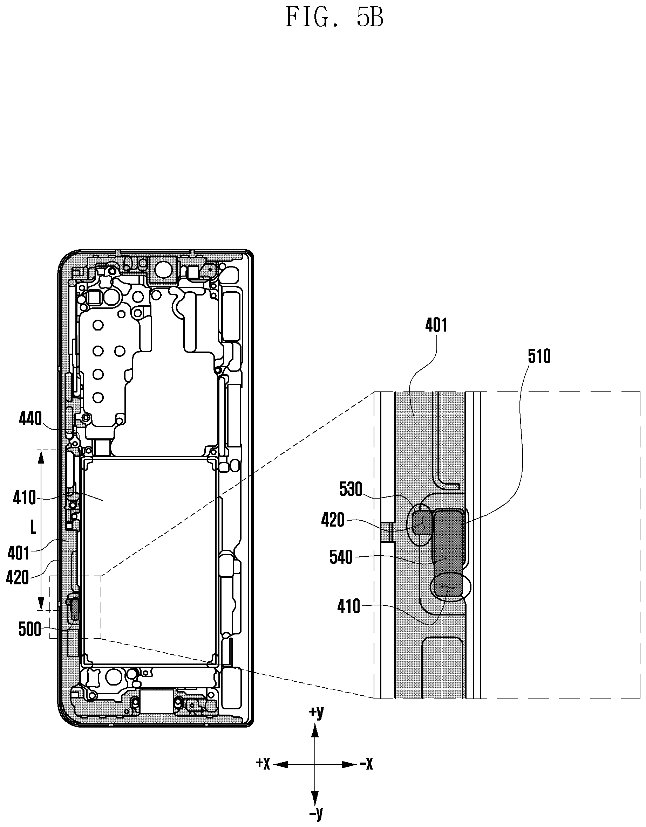

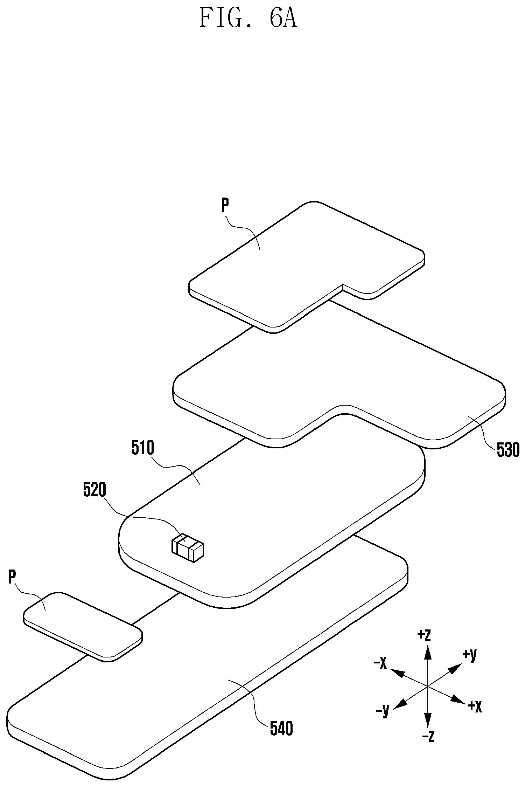

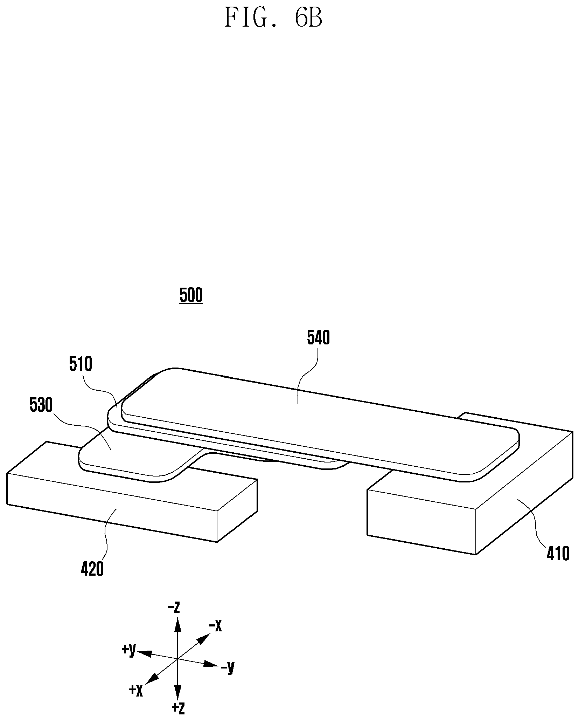

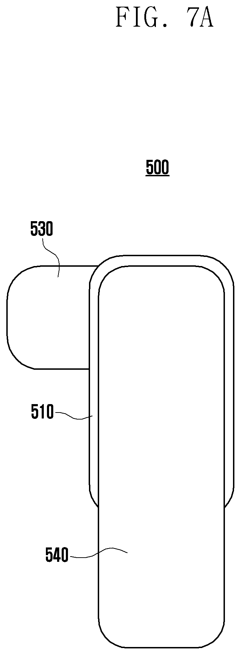

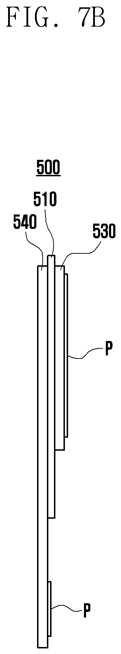

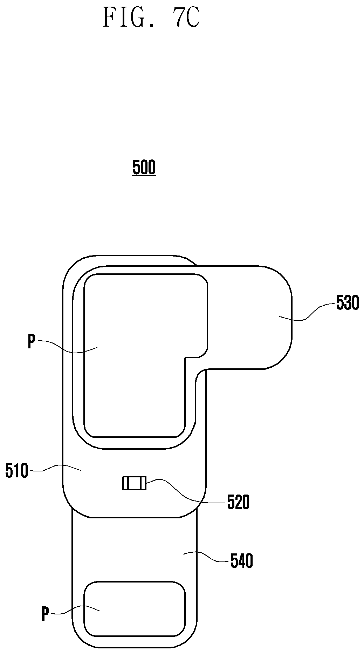

FIG. 5A is a view illustrating a state in which a conductive connection member is in contact with a side surface member and a first housing, according to an embodiment of the disclosure. FIG. 5B is a view illustrating a state in which the conductive connection member is seated on a reinforcing member located between the side surface member and the first housing, according to an embodiment of the disclosure. FIG. 6A is an exploded perspective view of the conductive connection member illustrated in FIG. 5A. FIG. 6B is an enlarged view illustrating the state in which the conductive connection member illustrated in FIG. 5A is in contact with the side surface member and the first housing. FIG. 7A is a front view of the conductive connection member illustrated in FIG. 6A. FIG. 7B is a side view of the conductive connection member illustrated in FIG. 6A. FIG. 7C is a rear view of the conductive connection member illustrated in FIG. 6A.

In the following description, in explaining the relationship between the first housing 210 and the first side surface member 213 and the relationship between the second housing 220 and the second side surface member 223 illustrated in FIG. 2A, the description will be made with reference to a housing 410 and a side surface member 420. The description of the housing 410 and the side surface member 420 described below may be applicable to the first housing 210 and the first side surface member 213, and may also be applicable to the second housing 220 and the second side surface member 223. However, hereinafter, for convenience of explanation, the housing 410 in FIG. 5A will be described as a component corresponding to the first housing 210 in FIG. 2A, and the side surface member 420 in FIG. 5A may be described as a component corresponding to the first side surface member 213 in FIG. 2A.

According to an embodiment, as illustrated in FIGS. 5A and 5B, an electronic device 200 (e.g., the electronic device 101 in FIG. 1) may include a side surface member 420 (e.g., the first side surface member 213 in FIG. 2A), a second side surface member 223, and a housing 410 (e.g., the first housing 210 and/or the second housing 220 of FIG. 2A). In an embodiment, the side surface member 420 may constitute the side surface exterior of the electronic device 200. For example, the side surface member 420 may be disposed to surround the side surface of the housing 410 such that at least a portion of the side surface member 420 constitutes a portion of the side surface of the electronic device 200. In an embodiment, the housing 410 is disposed inside the side surface member 420, and electronic components of the electronic device 200 may be disposed in the housing. In an embodiment, referring to FIG. 5A, at least a portion of the side surface member 420 may be spaced apart from the side surface of the housing 410. For example, as will be described later, the side surface member 420 may be connected to a printed circuit board (e.g., the board 270 in FIG. 4) disposed in the housing 410 via a circuit member 460 to be used as an antenna radiator. The area of the side surface member 420 used as the antenna radiator may be separated from the housing 410. Accordingly, excess current other than the current required for communication in a predetermined frequency band may not be applied to the side surface member 420 from the housing 410 or may be reduced.

In an embodiment, the side surface member 420 and the housing 410 may be integrated. Alternatively, the side surface member 420 may be fabricated separately from the housing 410 and coupled to the housing 410 through processing. According to an embodiment, the housing 410 and the side surface member 420 may be fabricated by using various processing methods such as computer numerical control (CNC), die casting, or pressing.

According to an embodiment, the housing 410 and the side surface member 420 may be at least partially made of a metal material. For example, the metal material may include titanium, an amorphous alloy, a metal-ceramic composite material (e.g., cermet), stainless steel, magnesium, a magnesium alloy, aluminum, an aluminum alloy, a zinc alloy, or a copper alloy. This is merely an example, and the side surface member 420 and housing 410 may be formed of various metal materials. In addition, the side surface member 420 and the housing 410 may be at least partially made of a non-metallic material. For example, the non-metallic material may include synthetic resin, ceramic, or engineering plastic.

In an embodiment, the side surface member 420 may be made of a conductive material (e.g., a metal material) to be used as an antenna radiator. In an embodiment, the side surface member 420 may be electrically connected to a communication module (e.g., the communication module 190 in FIG. 1) connected to a printed circuit board (e.g., the board 270 in FIG. 4) of the electronic device 300 to transmit or receive a communication signal (e.g., a radio frequency (RF) signal) to or from an external device. In an embodiment, the side surface member 420 may be in contact with the circuit member 460 connected to the printed circuit board 270 to be electrically connected to the communication module 190. In an embodiment, the side surface member 420 may be used as an antenna radiator configured to transmit or receive, via circuit member 460, at least one predetermined frequency band (e.g., LB (about 600 MHz to about 1 GHz), MB (about 1 GHz to about 2.3 GHz), HB (about 2.3 GHz to about 2.7 GHz), or UHB (about 2.7 GHz to about 6 GHz). In an embodiment, the side surface member 420 may be electrically connected to the communication module 190 via the circuit member 460 to transmit or receive an RF signal in a high-frequency band (e.g., 3.5 GHz to 28 GHz, or 28 GHz to 100 GHz (mmWave)).

According to an embodiment, as illustrated in FIG. 5A, the side surface member 420 may include multiple split portions 421. In an embodiment, the side surface member 420 may be physically split into multiple portions through the split portions 421. In an embodiment, the split portions 421 may be spaces provided in the side surface member 420 so that one side surface member 420 can be split into multiple portions. In an embodiment, an insulating member may be disposed in each split portion 421. In an embodiment, the insulating member may be made of a material with low conductivity or a material with a low dielectric constant. In an embodiment, the antenna resonance frequency may be determined depending on the physical length of the side surface member 420. The side surface member 420 may have different resonance frequencies by being split into multiple portions with different lengths via the insulating member disposed in each split portion 421. The electronic device 200 may execute communication in various frequency bands (e.g., short-range communication and long-range communication) by using the side surface member 420 with different resonance frequencies.

In an embodiment, the circuit member 460 may transmit a communication signal processed by the communication module 190 of the electronic device 200 to the side surface member 420 as an antenna radiator, or may transmit a communication signal received from the side surface member 420 to the communication module 190. In an embodiment, the circuit member 460 may be a flexible printed circuit board (FPCB) made of a flexible material and including a plurality of conductive lines (not illustrated) interconnecting the side surface member 420 and the printed circuit board 270. In an embodiment, the conductive lines may include, for example, a signal line through which a communication signal is transmitted, a power line through which power for driving a circuit is transmitted, and a ground line which is connected to a ground. In an embodiment, the circuit member 460 may be a coaxial cable with an impedance of 50 ohms.

In an embodiment, the circuit member 460 may electrically connect a power feeder 440 of the side surface member 420 to the printed circuit board 270. In an embodiment, the power feeder 440 may be a point where a communication signal of the communication module 190 is applied via the circuit member 460. In an embodiment, the circuit member 460 may be made of a conductive material to transmit an electrical signal generated by the communication module 190 to the power feeder 440 of the side surface member 420. In an embodiment, the power feeder 440 may be in contact with a conductive clip (e.g., a c-clip) of the circuit member 460. In addition, the power feeder 440 may be electrically connected to the circuit member 460 via a pogo pin, a spring, conductive Poron, conductive rubber, conductive tape, or a conductive connector.

In an embodiment, the circuit member 460 may be an antenna integrated circuit (IC). In an embodiment, the circuit member 460 may include a plurality of integrated circuits. For example, the circuit member 460 may include various antenna-related circuits, such as a matching circuit for impedance matching and a switching circuit that allows an antenna to correspond to a broadband characteristic. In an embodiment, the matching circuit may be a circuit that matches impedance by including an element such as an inductor or a conductive connection member 500 (capacitor). In an embodiment, the switching circuit may increase the antenna lengths of antenna radiators (e.g., the side surface member 420) by short-circuiting the antenna radiators that are electrically open to each other. The matching circuit and switching circuit of the circuit member 460 described above are not limited due to their names and should be understood as circuits that include elements capable of performing the corresponding functions. For example, the switching circuit may be called a switching circuit unit, and the matching circuit may be called a variable element unit. In an embodiment, among the antenna-related circuits, the matching circuit or switching circuit may be partially omitted.

According to an embodiment, an oxide film may be formed on the surface of the side surface member 420. In an embodiment, the oxide film may prevent corrosion of the side surface member 420 and increase durability of the side surface member 420. In an embodiment, the oxide film may be formed on the surface of the side surface member 420 through an anodizing process. In an embodiment, the anodizing process is an electrochemical process including immersing a metal such as aluminum in a liquid electrolyte and then applying a current by using the metal as a positive electrode and an auxiliary electrode as a negative electrode to form a uniform and thick oxide film on the metal surface.

In an embodiment, referring to FIG. 5A, the antenna length L of the side surface member 420 may be determined to enable communication in a determined frequency band. The antenna length L may be determined by the location of a portion from which the communication signal exits (a ground point or a ground) in a portion in which the communication signal is fed (power feeder 440). In an embodiment, the power feeder 440 of the side surface member 420 may be a portion that is in contact with the circuit member 460. In an embodiment, the ground point of the side surface member 420 may be a portion that is in contact with the conductive connection member 500, which will be described later.

In a comparative example, side surface member 420 and housing 410 may be physically connected to each other. For example, an antenna signal applied to the side surface member 420 may be grounded through a portion of the housing 410 which is in contact with the side surface member 420. In an embodiment, when the side surface member 420 and the housing 410 are physically connected to each other, current may be applied from the housing 410 to the side surface member 420 via the connected portion. For example, current leaked from an electronic component (e.g., printed circuit board 270) disposed in the housing 410 or current leaked from an external electronic device 200 as the electronic device 200 is connected to an external electronic device 200 (e.g., a charging port) may be applied from the housing 410 to the side surface member 420 so that the antenna radiation performance obtained by the side surface member 420 may be deteriorated.

In addition, as the electronic device 200 is used, scratches may occur on the oxide film of the side surface member 420. When excessive current leaks from the housing 410 to the side surface member 420 via the portion where the housing 410 and the side surface member 420 are connected to each other while the user's sweat, moisture, or the like flows into the spaces among the scratches in the oxide film, hydrogen gas may be generated in the spaces between the side surface member 420 and the oxide film. The hydrogen gas may cause the oxide layer to be separated from the side surface member 420.

According to an embodiment of the disclosure, as illustrated in FIGS. 5A and 5B, the side surface member 420 may be separated from the housing 410 in an area used as an antenna radiator to block or reduce an excess current other than those required for communication in a predetermined frequency band and applied from the housing 410. For example, the area of the side surface member 420 used as an antenna radiator may be separated from the housing 410.

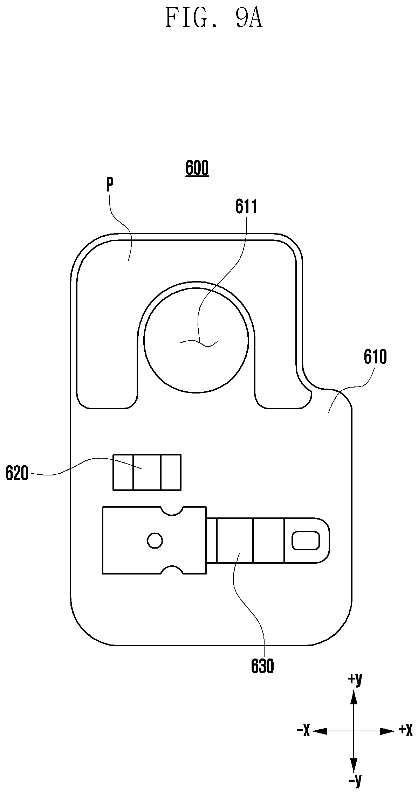

According to an embodiment, as illustrated in FIGS. 5A and 5B, the area of the side surface member 420 used as an antenna radiator may be separated from the housing 410. For example, the area of the side surface member 420 that is in contact with the circuit member 460 to be used as an antenna radiator may be spaced apart from the housing 410. In an embodiment, the electronic device 200 may include a conductive connection member 500 that is in contact with the side surface member 420 and the housing 410 to electrically connect the side surface member 420 to the housing 410. In an embodiment, in the conductive connection member 500, the portion that is in contact with the side member 420 (e.g., the first metal plate 530 in FIG. 6A and/or the first contact member in FIG. 9A) and the portion that is in contact with the housing 410 (e.g., the second metal plate 540 in FIG. 6A) may be made of a conductive material (e.g., a metal material). In an embodiment, the conductive connection member 500 may function as a ground to emit a communication signal applied from the circuit member 460 to the power feeder 440 of the side surface member 420, to the housing 410. For example, the conductive connection member 500 may emit a communication signal applied from the circuit member 460 to the power feeder 440 of the side surface member 420, to the housing 410 connected to the ground.

In an embodiment, the antenna length L of the side surface member 420 may be determined to enable communication in a determined frequency band. For example, the antenna length L of the side surface member 420 may be determined based on the gap between the power feeder 440 of the side surface member 420 and the point where the conductive connection member 500 is in contact with the side surface member 420. In an embodiment, the gap between the power feeder 440 of the side surface member 420 and the point where the conductive connection member 500 is contact with the side surface member 420 may be determined based on the frequency band to be communicated via the side surface member 420.

According to an embodiment, as illustrated in FIG. 5B, a reinforcing member 401 made of a non-metallic material may be disposed on the side surface of the housing 410. In an embodiment, the reinforcing member 401 may be disposed in the space between the housing 410 and the side surface member 420. In an embodiment, the reinforcing member 401 may be made of a synthetic resin, ceramic, engineering plastic, or polycarbonate (PC) material. In an embodiment, the reinforcing member 401 may be disposed between the side surface member 420 and the side of the housing 410 through an injection molding process.

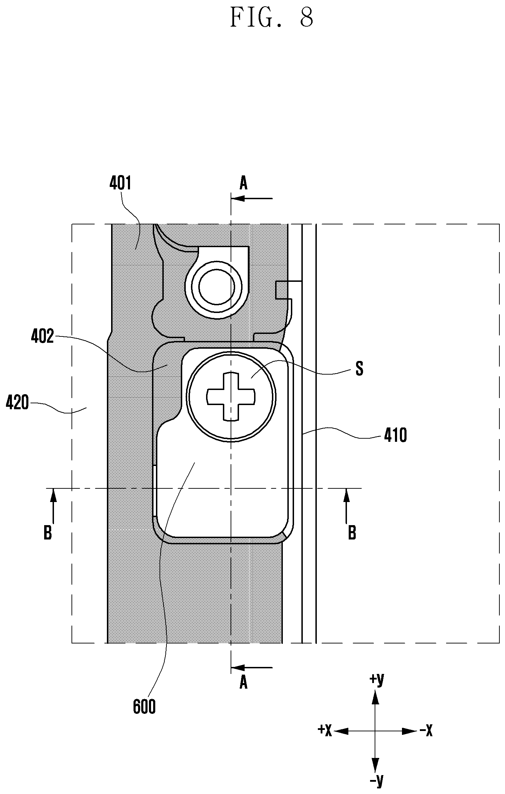

In an embodiment, the reinforcing member 401 may include a seating portion 402 (e.g., the seating portion 402 in FIG. 8 ) on which the conductive connection member 500 is disposed. The conductive connection member 500 may be fixed to the seating portion 402 via an adhesive member P attached to one surface thereof. In an embodiment, the conductive connection member 500 may be disposed on the reinforcing member 401 and brought into contact with the side surface member 420 made of a metal material and a portion of the housing 410 made of a metal material to guide a communication signal from the side surface member 420 to a ground connected to the housing 410.

According to an embodiment, as illustrated in FIGS. 6A to 7C, the conductive connection member 500 may include a first metal plate 530 which is in contact with the side surface member 420, a second metal 540 which is in contact with the housing 410, a circuit board 510 disposed between the first metal plate 530 and the second metal plate 540, and a current control element 520 disposed on the circuit board 510 to control current applied to the side surface member 420 from the housing 410. In an embodiment, the conductive connection member 500 may be stacked in the order of the first metal plate 530, the circuit board 510, the second metal plate 540. In an embodiment, the first metal plate 530 and the second metal plate 540 may be electrically connected to the circuit board 510 through soldering or conductive tape. In an embodiment, the side surface member 420 and the housing 410 may be electrically connected to each other via the first metal plate 530 and the second metal plate 540. A communication signal applied from the circuit member 460 to the power feeder 440 may be emitted to a ground connected to the housing 410 via the first metal plate 530, the circuit board 510, the second metal plate 540.

In an embodiment, the current control element 520 may control the current applied from the housing 410 to the side surface member 420. For example, the current control element 520 may block or reduce current leaked from an electronic component disposed in the housing 410 or an external electronic device 200 (e.g., a charging port) and applied to the side surface member 420. In an embodiment, the conductive connection member 500 may block or reduce a direct current (DC) current applied from the housing 410 to the side surface member 420 via the current control element 520.

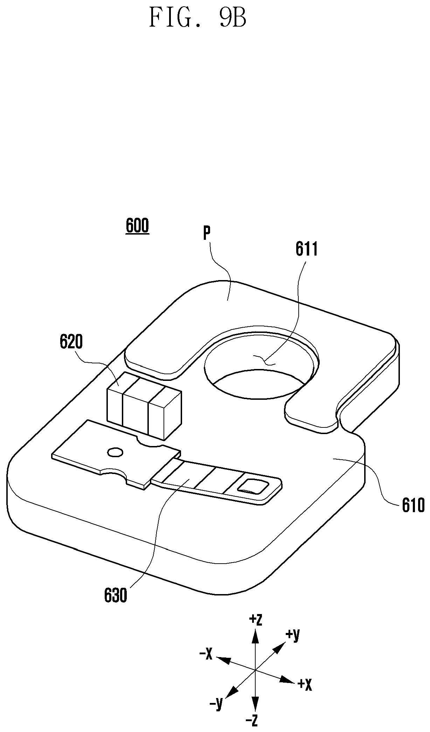

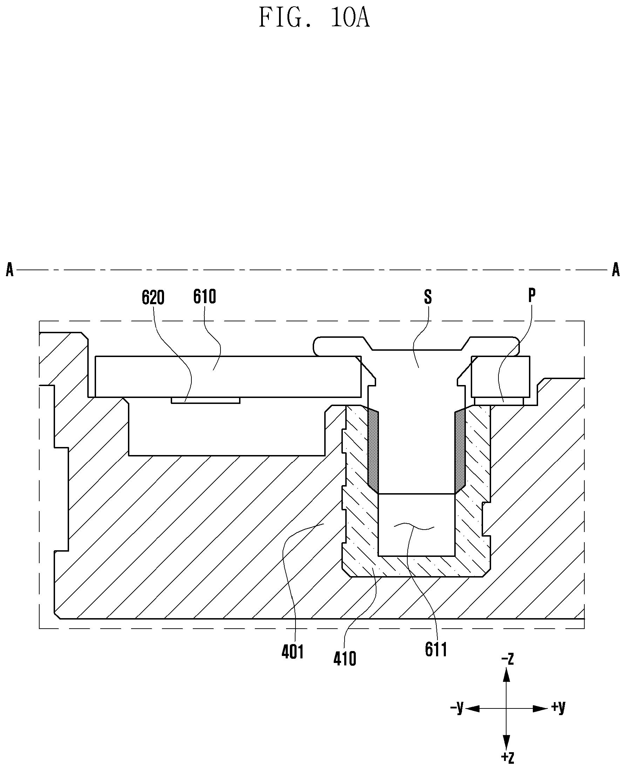

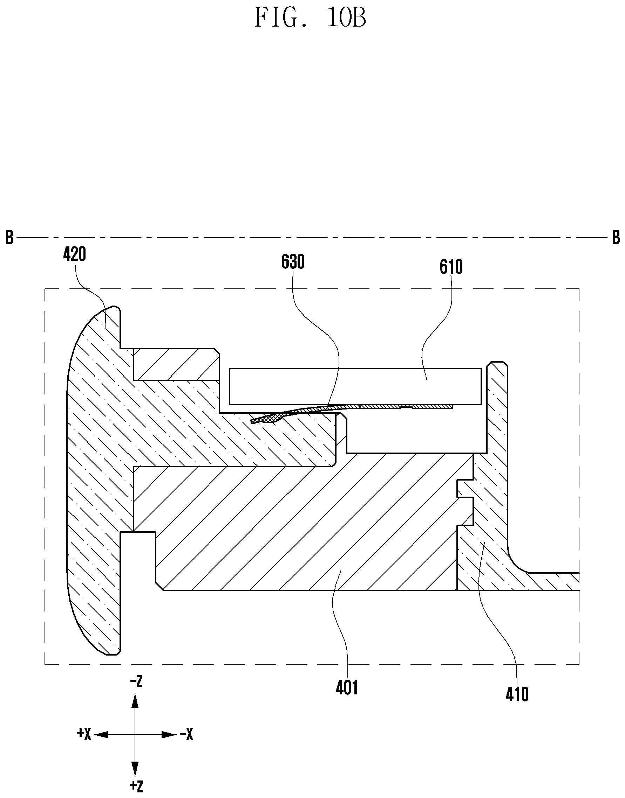

FIG. 8 is a view illustrating a state in which a conductive connection member is in contact with a side surface member and a first housing, according to an embodiment of the disclosure. FIGS. 9A and 9B are views illustrating the configuration of the conductive connection member illustrated in FIG. 8. FIG. 10A is a cross-sectional view taken along line A-A in FIG. 8. FIG. 10B is a cross-sectional view taken along line B-B in FIG. 8.

The following description, a conductive connection member 600 of an embodiment different from the conductive connection member 500 shown in FIGS. 5A to 7C may be described. The conductive connection member 600 to be described below may play the same role as the conductive connection member 500 described above with reference to FIGS. 5A to 7C. In the following description, descriptions of components that are the same as or similar to those described above with reference to FIGS. 5A to 7C will be omitted.

According to an embodiment, as illustrated in FIG. 8, the conductive connection member 600 may be disposed in a seating portion 402 of the reinforcing member 401 disposed between the housing 410 (e.g., the first housing 210 or the second housing 220 in FIG. 2A) and the side surface member 420 (e.g., the first side surface member 213 or the second side surface member 223 in FIG. 2A). In an embodiment, the conductive connection member 600 may be electrically connected to the side surface member 420 and the housing 410.

In an embodiment, referring to FIGS. 9A and 9B, the conductive connection member 600 may include a circuit board 610 on which a current control element 620 is disposed, and a first contact member 630 disposed on the circuit board 610 to be in contact with the side surface member 420. In an embodiment, the first contact member 630 may be made of a conductive material and electrically connected to the side surface member 420. In an embodiment, the first contact member 630 may be made of a conductive material. For example, the first contact member 630 may be a clip (e.g., a C-clip) made of a conductive material. In an embodiment, the circuit board 610 may include a screw hole 611 into which a coupling member (e.g., a screw) S is inserted. In an embodiment, the circuit board 610 of the conductive connection member 600 may be fixed to the housing 410 by a coupling member S made of a conductive material inserted into the screw hole 611. The conductive connection member 600 may be electrically connected to the side surface member 420 via the first contact member 630 and may be electrically connected to the housing 410 via the coupling member S. Accordingly, a communication signal of the communication module 190 applied from the circuit member 460 to the power feeder 440 may be guided to a ground connected to the housing 410 via the first contact member 630, the circuit board 610, and the coupling member S.

In an embodiment (not illustrated in the drawings), the conductive connection member 600 may include a circuit board 610 on which a current control element 620 is disposed, a first contact member 600 which is disposed on the circuit board 610 to be in contact with the side surface member 420, and a second contact member (not illustrated) which is disposed on the circuit board 630 to be in contact with the first housing 210. In an embodiment, the first contact member 630 and the second contact member may be made of a conductive material. In an embodiment, the first contact member 630 and the second contact member may be clips (e.g., C-clips) made of a conductive material. In an embodiment, the conductive connection member 600 may be in contact with the side surface member 420 via the first contact member 630 and in contact with the first housing 210 via the second contact member while being disposed on the seating portion 402 of the reinforcing member 401. Accordingly, a communication signal applied from the circuit member 460 to the power feeder 440 may be guided to the housing 410 via the first contact member 630, the circuit board 610, and the second contact member.

According to an embodiment of the present disclosure, as illustrated in FIGS. 5A and 5B and FIG. 8, the area of the side surface member 420 used as an antenna radiator may be separated from the housing 410. In an embodiment, the antenna length L of the side surface member 420 may be determined based on the gap between the power feeder 440 of the side surface member 420 and the conductive connection member (e.g., the conductive connection member 500 in FIG. 7A and the conductive connection 600 in FIG. 9A). In an embodiment, the conductive connection member 500 or 600 may guide a communication signal applied from the communication module 190 via the circuit member 460 to the housing 410 connected to the ground to be transmitted to the side surface member 420 serving as an antenna. Meanwhile, the current control element 520 or 620 disposed on the circuit board 510 or 610 of the conductive connection members 500 or 600 may block or reduce the current leaked from an electronic component disposed in the housing 410 or an external electronic device (e.g., a charging port) and applied to the side surface member 420. Accordingly, since no current is applied from the housing 410 to the side surface member 420, it is possible to secure antenna radiation performance through the side surface member 420 at a certain level. In addition, since no current is applied from the housing 410 to the side surface member 420, even when moisture flows into the spaces between the side surface member 420 and the oxide film through the scratches in the oxide film formed on the outer surface of the side surface member 420, hydrogen gas is not generated so that the oxide film may not be separated from the side surface member 420.

According to various embodiments, although the electronic device 200 (e.g., the electronic device 101 of FIG. 1) has been described on the premise that the electronic device is a foldable electronic device, the disclosure is not limited thereto. In an embodiment, the disclosure may be applicable to an electronic device having a bar type or plate type appearance consisting of only one of the first housing 210 or the second housing 220. In addition, the disclosure may be applicable to a slidable electronic device, a stretchable electronic device, and/or a rollable electronic device. The "slidable electronic device", the "stretchable electronic device", and/or the "rollable electronic device" may refer to an electronic device in which a display (e.g., the first display 230 in FIG. 2A) is transformable by bending such that at least a portion of the display is folded, wound, rolled, or at least partially expanded in an area. The slidable electronic device, the stretchable electronic device, and/or the rollable electronic device may allow a user to use a screen display area in an expanded state by unfolding the display or exposing a greater area of the display to the outside if necessary.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

An electronic device 200 (e.g., the electronic device 101 of FIG. 1) according to an embodiment of the disclosure may include a housing 410 (e.g., the first housing 210 or the second housing 220 in FIG. 2A) at least a portion of which is made of a conductive material, a side surface member 420 (e.g., the first side surface member 213 or the second side surface member 223 in FIG. 2A) surrounding a side surface of the housing while being separated from the side surface of the housing, in which the side surface member is made of a conductive material and includes a power feeder 440, a printed circuit board 270 on which a communication module 190 is disposed and which is disposed in the housing, a circuit member 460 configured to electrically connect the power feeder of the side surface member to the printed circuit board such that a communication signal generated by the communication module is transmitted to the side surface member, and a conductive connection member 500 or 600 configured to electrically connect the side surface member to the housing, in which the conductive connection member includes a current control element 520 or 620 configured to control a current applied from the housing to the side surface member.

The current control element of the conductive connection member may be configured to block or reduce a current flowing from the housing into the side surface member.

The side surface member may be separated from the housing in an area which is used as an antenna radiator when a communication signal is applied from the circuit member to the power feeder.

The conductive connection member may include a first metal plate 530 which is in contact with the side surface member, a second metal plate 540 which is in contact with the housing, and a circuit board 510 which is disposed between the first metal plate and the second metal plate and on which the current control element is disposed.

The electronic device may further include a reinforcing member 401 made of a non-metallic material and at least partially disposed between the side surface member and the housing, in which the reinforcing member includes a seating portion 402 on which the conductive connection member is disposed.

The electronic device may further include an adhesive member P disposed between the reinforcing member and the conductive connection member.

The conductive connection member may include a circuit board 610 on which the current control element is disposed, a first contact member 630 made of a conductive material and disposed on the circuit board to be in contact with the side surface member, and a second contact member made of a conductive material and disposed on the circuit board to be in contact with the housing.

The conductive connection member may include a circuit board 610 on which the current control element is disposed and which includes a screw hole 611, a contact member 630 made of a conductive material and disposed on the circuit board to be in contact with the side surface member, and a coupling member S made of a conductive material and passing through the screw hole to be fixed to the housing.

The side surface member may include an oxide film formed on a surface thereof through an anodizing process.

A gap between the power feeder and the conductive connection member may be determined based on an antenna operating frequency used by the side surface member.

The housing may include a first housing 210 and a second housing 220 connected to each other to be foldable about a folding axis via a hinge device, the side surface member may include a first side surface member 213 surrounding a side surface of the first housing while being separated from the side surface of the first housing, and a second side surface member 223 surrounding a side surface of the second housing while being separated from the side surface of the second housing, and the conductive connection member may connect the first side surface member to the first housing and connects the second side surface member to the second housing.

According to an embodiment of the disclosure, there is provided an antenna structure for an electronic device that includes a side surface member 213, 223, or 420 surrounding a side surface of a housing 210, 220, or 410 made of a conductive material and having an oxide film on a surface thereof while being separated from the housing, constituting an exterior of the electronic device 101 or 200. The antenna structure may include a power feeder 440 of the side surface member, a printed circuit board 270 on which a communication module 190 is disposed and which is disposed in the housing, a circuit member 460 configured to electrically connect the power feeder of the side surface member to the printed circuit board such that a communication signal generated by the communication module is transmitted to the side surface member, and a conductive connection member 500 or 600 configured to electrically connect the side surface member to the housing, in which the conductive connection member includes a current control element 520 or 620 configured to control a current applied from the housing to the side surface member.

The current control element of the conductive connection member may be configured to block or reduce a current flowing from the housing into the side surface member.

The side surface member may be separated from the housing in an area which is used as an antenna radiator when a communication signal is applied from the circuit member to the power feeder.

The conductive connection member may include a first metal plate 530 which is in contact with the side surface member, a second metal plate 540 which is in contact with the housing, and a circuit board 510 which is disposed between the first metal plate and the second metal plate and on which the current control element is disposed.

The electronic device may further include a reinforcing member 401 made of a non-metallic material and at least partially disposed between the side surface member and the housing, in which the reinforcing member includes a seating portion 402 on which the conductive connection member is disposed.

The electronic device may further include an adhesive member P disposed between the reinforcing member and the conductive connection member.

The conductive connection member may include a circuit board 610 on which the current control element is disposed, a first contact member 630 made of a conductive material and disposed on the circuit board to be in contact with the side surface member, and a second contact member made of a conductive material and disposed on the circuit board to be in contact with the housing.

The conductive connection member may include a circuit board 610 on which the current control element is disposed and which includes a screw hole 611, a contact member 630 made of a conductive material and disposed on the circuit board to be in contact with the side surface member, and a coupling member S made of a conductive material and passing through the screw hole to be fixed to the housing.

A gap between the power feeder and the conductive connection member may be determined based on an antenna operating frequency used by the side surface member.

An electronic device 200 (e.g., the electronic device 101 in FIG. 1 or the electronic device 200 in FIG. 2A) according to various embodiments disclosed herein may include a housing 410 (e.g., the first housing 210 or the second housing 220 in FIG. 2A) at least a portion of which is made of a conductive material, a side surface member 420 (e.g., the first side surface member 213 or the second side surface member 223 in FIG. 2A) surrounding a side surface of the housing while being separated from the side surface of the first housing, in which the side surface member is made of a conductive material, a printed circuit board 270 on which a communication module 190 is disposed and which is disposed in the housing, a circuit member 460 configured to electrically connect the side surface member to the printed circuit board such that a communication signal generated by the communication module is transmitted to the side surface member, in which the circuit member includes a power feeder located in contact with the side surface member, and a conductive connection member 500 or 600 configured to electrically connect the side surface member to the housing, in which the conductive connection member includes a current control element 520 or 620 configured to control a current applied from the housing to the side surface member.

The current control element of the conductive connection member may be configured to block or reduce a current flowing from the housing into the side surface member.

The side surface member may be separated from the housing in an area which is used as an antenna radiator when the communication signal is applied from the power feeder.

The conductive connection member may include a first metal plate 530 located in contact with the side surface member, a second metal plate 540 located in contact with the housing, and a circuit board 510 which is disposed between the first metal plate and the second metal plate and on which the current control element is disposed.

The electronic device may further include a reinforcing member 401 made of a non-metallic material and at least partially disposed between the side surface member and the housing, in which the reinforcing member includes a seating portion 402 on which the conductive connection member is disposed.

The electronic device may further include an adhesive member P disposed between the reinforcing member and the conductive connection member.

The conductive connection member may include a circuit board 610 on which the current control element is disposed, a first contact member 630 made of a conductive material and disposed on the circuit board to be in contact with the side surface member, and a second contact member (not illustrated) made of a conductive material and disposed on the circuit board to be in contact with the housing.

The conductive connection member may include a circuit board 610 on which the current control element is disposed and which includes a screw hole 611, a contact member 630 made of a conductive material and disposed on the circuit board to be in contact with the side surface member, and a coupling member S made of a conductive material and passing through the screw hole to be fixed to the housing.

The side surface member may include an oxide film formed on a surface thereof through an anodizing process.

A gap between the power feeder of the circuit member and the conductive connection member may be determined based on an antenna operating frequency used by the side surface member.

The housing may include a first housing 210 and a second housing 220 connected to each other to be foldable about a folding axis via a hinge device, the side surface member may include a first side surface member 213 surrounding a side surface of the first housing while being separated from the side surface of the first housing, and a second side surface member 223 surrounding a side surface of the second housing while being separated from the side surface of the second housing, and the conductive connection member may connect the first side surface member to the first housing and connects the second side surface member to the second housing.

According to an embodiment of the disclosure, there is provided an antenna structure for the electronic device including a side surface member 420 (e.g., the first side surface member 213 or the second side surface 223 in FIG. 2A) which surrounds a side surface of a housing 410 (e.g., the housing 210 or the housing 220 in FIG. 2A) made of a conductive material and having an oxide film on a surface thereof while being separated from the housing, constitutes an exterior of the electronic device 200 (e.g., the electronic device 101 in FIG. 1 or the electronic device 200 in FIG. 2A), an antenna structure may include a printed circuit board 270 on which a communication module 190 is disposed and which is disposed in the housing, a circuit member configured to electrically connect the side surface member to the printed circuit board such that a communication signal generated by the communication module is transmitted to the side surface member, in which the circuit member includes a power feeder located in contact with the side surface member, and a conductive connection member 500 or 600 configured to electrically connect the side surface member to the housing, in which the conductive connection member includes a current control element 520 or 620 configured to control a current applied from the housing to the side surface member.

The current control element of the conductive connection member may be configured to block or reduce a current flowing from the housing into the side surface member.

The side surface member may be separated from the housing in an area which is used as an antenna radiator when the communication signal is applied from the power feeder.

The conductive connection member may include a first metal plate 530 located in contact with the side surface member, a second metal plate 540 located in contact with the housing, and a circuit board 510 which is disposed between the first metal plate and the second metal plate and on which the current control element is disposed.

The electronic device may further include a reinforcing member 401 made of a non-metallic material and at least partially disposed between the side surface member and the housing, in which the reinforcing member includes a seating portion 402 on which the conductive connection member is disposed.

The electronic device may further include an adhesive member P disposed between the reinforcing member and the conductive connection member.

The conductive connection member may include a circuit board 610 on which the current control element is disposed, a first contact member 630 made of a conductive material and disposed on the circuit board to be in contact with the side surface member, and a second contact member made of a conductive material and disposed on the circuit board to be in contact with the housing.

The conductive connection member may include a circuit board 610 on which the current control element is disposed and which includes a screw hole 611, a contact member 630 made of a conductive material and disposed on the circuit board to be in contact with the side surface member, and a coupling member S made of a conductive material and passing through the screw hole to be fixed to the housing.

A gap between the power feeder of the circuit member and the conductive connection member may be determined based on an antenna operating frequency used by the side surface member.

It will be understood that, in addition to the above-disclosed embodiments, the disclosure also contemplates and includes embodiments based on combinations of any two or more of the above-disclosed embodiments and embodiments including any combination of the above-described features. As disclosed herein, the absence of explicit indication that two features may be combined or two embodiments may be combined does not mean that such combinations are not contemplated, but such combinations should be considered as being included herein.

## Claims

1. An electronic device (101, 200) comprising:
a housing (210, 220, 410) at least a portion of which is made of a conductive material;
a side surface member (213, 223, 420) surrounding a side surface of the housing while being separated from the side surface of the housing, wherein the side surface member is made of a conductive material and comprises a power feeder (440);
a printed circuit board (270) on which a communication module (190) is disposed and which is disposed in the housing;
a circuit member (460) configured to electrically connect the power feeder of the side surface member to the printed circuit board such that a communication signal generated by the communication module is transmitted to the side surface member; and
a conductive connection member (500, 600) configured to electrically connect the side surface member to the housing, wherein the conductive connection member comprises a current control element (520, 620) configured to control a current applied from the housing to the side surface member.

2. The electronic device of claim 1, wherein the current control element of the conductive connection member is configured to block or reduce a current flowing from the housing into the side surface member.

3. The electronic device of claim 1, wherein the side surface member is separated from the housing in an area configured to be used as an antenna radiator in case that a communication signal is applied from the circuit member to the power feeder.

4. The electronic device of claim 1, wherein the conductive connection member comprises a first metal plate (530) located in contact with the side surface member, a second metal plate (540) located in contact with the housing, and a circuit board (510) which is disposed between the first metal plate and the second metal plate and on which the current control element is disposed.

5. The electronic device of claim 1, further comprising a reinforcing member (401) made of a non-metallic material and at least partially disposed between the side surface member and the housing, wherein the reinforcing member comprises a seating portion (402) on which the conductive connection member is disposed.

6. The electronic device of claim 5, further comprising an adhesive member (P) disposed between the reinforcing member and the conductive connection member.

7. The electronic device of claim 1, wherein the conductive connection member comprises a circuit board (610) on which the current control element is disposed, a first contact member (630) made of a conductive material and disposed on the circuit board to be in contact with the side surface member, and a second contact member made of a conductive material and disposed on the circuit board to be in contact with the housing.

8. The electronic device of claim 1, wherein the conductive connection member comprises a circuit board (610) on which the current control element is disposed and which comprises a screw hole (611), a contact member (630) made of a conductive material and disposed on the circuit board to be in contact with the side surface member, and a coupling member (S) made of a conductive material and passing through the screw hole to be fixed to the housing.

9. The electronic device of claim 1, wherein the side surface member comprises an oxide film formed on a surface thereof through an anodizing process.

10. The electronic device of claim 1, wherein a gap between the power feeder and the conductive connection member is determined based on an antenna operating frequency used by the side surface member.

11. The electronic device of claim 1, wherein the housing comprises a first housing (210) and a second housing (220) connected to each other to be foldable about a folding axis via a hinge device,
wherein the side surface member comprises a first side surface member (213) surrounding a side surface of the first housing while being separated from the side surface of the first housing, and a second side surface member (223) surrounding a side surface of the second housing while being separated from the side surface of the second housing, and
wherein the conductive connection member connects the first side surface member to the first housing and connects the second side surface member to the second housing.

12. An antenna structure for an electronic device that comprises a side surface member (213, 223, 420) surrounding a side surface of a housing (210, 220, 410) made of a conductive material and having an oxide film on a surface thereof while being separated from the housing, constituting an exterior of the electronic device (101, 200), the antenna structure comprising:
the side surface member;
a power feeder (440) of the side surface member;
a printed circuit board (270) on which a communication module (190) is disposed and which is configured to be disposed in the housing;
a circuit member (460) configured to electrically connect the power feeder of the side surface member to the printed circuit board such that a communication signal generated by the communication module is transmitted to the side surface member; and
a conductive connection member (500, 600) configured to electrically connect the side surface member to the housing, wherein the conductive connection member comprises a current control element (520, 620) configured to control a current applied from the housing to the side surface member.

13. The antenna structure of claim 12, wherein the side surface member is separated from the housing in an area configured to be used as an antenna radiator in case that a communication signal is applied from the circuit member to the power feeder.

14. The antenna structure of claim 12, wherein the conductive connection member comprises a first metal plate (530) located in contact with the side surface member, a second metal plate (540) located in contact with the housing, and a circuit board (510) which is disposed between the first metal plate and the second metal plate and on which the current control element is disposed.

15. The antenna structure of claim 12, wherein the conductive connection member comprises a circuit board (610) on which the current control element is disposed and which comprises a screw hole (611), a contact member (630) made of a conductive material and disposed on the circuit board to be in contact with the side surface member, and a coupling member (S) made of a conductive material and passing through the screw hole to be fixed to the housing.

## Patentansprüche

1. Elektronische Vorrichtung (101, 200), die Folgendes umfasst:
ein Gehäuse (210, 220, 410), das zumindest teilweise aus einem leitfähigen Material besteht;
ein Seitenflächenelement (213, 223, 420), das eine Seitenfläche des Gehäuses umgibt, während es von der Seitenfläche des Gehäuses getrennt ist, wobei das Seitenflächenelement aus einem leitfähigen Material besteht und eine Stromzuführung (440) umfasst;
eine Leiterplatte (270), auf der ein Kommunikationsmodul (190) angeordnet ist und die in dem Gehäuse angeordnet ist;
ein Schaltungselement (460), das so konfiguriert ist, dass es die Stromzuführung des Seitenflächenelements mit der Leiterplatte elektrisch verbindet, sodass ein von dem Kommunikationsmodul erzeugtes Kommunikationssignal an das Seitenflächenelement übertragen wird; und
ein leitfähiges Verbindungselement (500, 600), das so konfiguriert ist, dass es das Seitenflächenelement mit dem Gehäuse elektrisch verbindet, wobei das leitfähige Verbindungselement ein Stromsteuerungselement (520, 620) umfasst, das so konfiguriert ist, dass es einen von dem Gehäuse an das Seitenflächenelement angelegten Strom steuert.

2. Elektronische Vorrichtung nach Anspruch 1, wobei das Stromsteuerungselement des leitfähigen Verbindungselements so konfiguriert ist, dass es einen Strom blockiert oder reduziert, der von dem Gehäuse in das Seitenflächenelement fließt.

3. Elektronische Vorrichtung nach Anspruch 1, wobei das Seitenflächenelement von dem Gehäuse in einem Bereich getrennt ist, der so konfiguriert ist, dass er als Antennenstrahler verwendet wird, falls ein Kommunikationssignal von dem Schaltungselement an die Stromzuführung angelegt wird.

4. Elektronische Vorrichtung nach Anspruch 1, wobei das leitfähige Verbindungselement eine erste Metallplatte (530) umfasst, die mit dem Seitenflächenelement in Kontakt steht, eine zweite Metallplatte (540), die mit dem Gehäuse in Kontakt steht, und eine Leiterplatte (510), die zwischen der ersten Metallplatte und der zweiten Metallplatte angeordnet ist und auf der das Stromsteuerungselement angeordnet ist.

5. Elektronische Vorrichtung nach Anspruch 1, die ferner ein Verstärkungselement (401) aus einem nichtmetallischen Material umfasst und zumindest teilweise zwischen dem Seitenflächenelement und dem Gehäuse angeordnet ist, wobei das Verstärkungselement einen Sitzabschnitt (402) umfasst, auf dem das leitfähige Verbindungselement angeordnet ist.

6. Elektronische Vorrichtung nach Anspruch 5, die ferner ein Klebeelement (P) umfasst, das zwischen dem Verstärkungselement und dem leitfähigen Verbindungselement angeordnet ist.

7. Elektronische Vorrichtung nach Anspruch 1, wobei das leitfähige Verbindungselement eine Leiterplatte (610) umfasst, auf der das Stromsteuerungselement angeordnet ist, ein erstes Kontaktelement (630) aus einem leitfähigen Material, das auf der Leiterplatte so angeordnet ist, dass es mit dem Seitenflächenelement in Kontakt steht, und ein zweites Kontaktelement aus einem leitfähigen Material, das auf der Leiterplatte so angeordnet ist, dass es mit dem Gehäuse in Kontakt steht.

8. Elektronische Vorrichtung nach Anspruch 1, wobei das leitfähige Verbindungselement eine Leiterplatte (610) umfasst, auf der das Stromsteuerungselement angeordnet ist und die ein Schraubenloch (611) umfasst, ein Kontaktelement (630) aus einem leitfähigem Material, das so auf der Leiterplatte angeordnet ist, dass es mit dem Seitenflächenelement in Kontakt steht, und ein Kopplungselement (S) aus einem leitfähigen Material, das durch das Schraubenloch verläuft, um an dem Gehäuse befestigt zu werden.

9. Elektronische Vorrichtung nach Anspruch 1, wobei das Seitenflächenelement einen Oxidfilm umfasst, der durch einen Anodisierungsprozess auf seiner Oberfläche gebildet wurde.

10. Elektronische Vorrichtung nach Anspruch 1, wobei eine Lücke zwischen der Stromzuführung und dem leitfähigen Verbindungselement basierend auf einer von dem Seitenflächenelement verwendeten Antennenbetriebsfrequenz bestimmt wird.

11. Elektronische Vorrichtung nach Anspruch 1, wobei das Gehäuse ein erstes Gehäuse (210) und ein zweites Gehäuse (220) umfasst, die über eine Scharniervorrichtung so miteinander verbunden sind, dass sie um eine Faltachse gefaltet werden können,
wobei das Seitenflächenelement ein erstes Seitenflächenelement (213) umfasst, das eine Seitenfläche des ersten Gehäuses umgibt, während es von der Seitenfläche des ersten Gehäuses getrennt ist, und ein zweites Seitenflächenelement (223), das eine Seitenfläche des zweiten Gehäuses umgibt, während es von der Seitenfläche des zweiten Gehäuses getrennt ist, und
wobei das leitfähige Verbindungselement das erste Seitenflächenelement mit dem ersten Gehäuse verbindet und das zweite Seitenflächenelement mit dem zweiten Gehäuse verbindet.

12. Antennenstruktur für eine elektronische Vorrichtung, die ein Seitenflächenelement (213, 223, 420) umfasst, das eine Seitenfläche eines Gehäuses (210, 220, 410) aus einem leitfähigen Material umgibt und auf dessen Oberfläche sich ein Oxidfilm befindet, während es von dem Gehäuse getrennt ist, und das die Außenseite der elektronischen Vorrichtung (101, 200) bildet, wobei die Antennenstruktur Folgendes umfasst:
das Seitenflächenelement;
eine Stromzuführung (440) des Seitenflächenelements;
eine Leiterplatte (270), auf der ein Kommunikationsmodul (190) angeordnet ist und die so konfiguriert ist, dass sie in dem Gehäuse angeordnet werden kann;
ein Schaltungselement (460), das so konfiguriert ist, dass es die Stromzuführung des Seitenflächenelements mit der Leiterplatte elektrisch verbindet, sodass ein von dem Kommunikationsmodul erzeugtes Kommunikationssignal an das Seitenflächenelement übertragen wird; und
ein leitfähiges Verbindungselement (500, 600), das so konfiguriert ist, dass es das Seitenflächenelement mit dem Gehäuse elektrisch verbindet, wobei das leitfähige Verbindungselement ein Stromsteuerungselement (520, 620) umfasst, das so konfiguriert ist, dass es einen von dem Gehäuse an das Seitenflächenelement angelegten Strom steuert.

13. Antennenstruktur nach Anspruch 12, wobei das Seitenflächenelement von dem Gehäuse in einem Bereich getrennt ist, der so konfiguriert ist, dass er als Antennenstrahler verwendet wird, falls ein Kommunikationssignal von dem Schaltungselement an die Stromzuführung angelegt wird.

14. Antennenstruktur nach Anspruch 12, wobei das leitfähige Verbindungselement eine erste Metallplatte (530) umfasst, die mit dem Seitenflächenelement in Kontakt steht, eine zweite Metallplatte (540), die mit dem Gehäuse in Kontakt steht, und eine Leiterplatte (510), die zwischen der ersten Metallplatte und der zweiten Metallplatte angeordnet ist und auf der das Stromsteuerungselement angeordnet ist.

15. Antennenstruktur nach Anspruch 12, wobei das leitfähige Verbindungselement eine Leiterplatte (610) umfasst, auf der das Stromsteuerungselement angeordnet ist und die ein Schraubenloch (611) umfasst, ein Kontaktelement (630) aus einem leitfähigen Material, das auf der Leiterplatte so angeordnet ist, dass es mit dem Seitenflächenelement in Kontakt steht, und ein Kopplungselement (S) aus einem leitfähigen Material, das durch das Schraubenloch verläuft, um an dem Gehäuse befestigt zu werden.

## Revendications

1. Dispositif électronique (101, 200) comprenant :
un boîtier (210, 220, 410) dont au moins une partie est constituée d'un matériau conducteur ;
un élément de surface latérale (213, 223, 420) entourant une surface latérale du boîtier tout en étant séparé de la surface latérale du boîtier, où l'élément de surface latérale est constitué d'un matériau conducteur et comprend un alimentateur de puissance (440) ;
une carte de circuit imprimé (270) sur laquelle un module de communication (190) est disposé et qui est disposée dans le boîtier ;
un élément de circuit (460) configuré pour connecter électriquement l'alimentateur de puissance de l'élément de surface latérale à la carte de circuit imprimé de sorte qu'un signal de communication généré par le module de communication est transmis à l'élément de surface latérale ; et
un élément de connexion conducteur (500, 600) configuré pour connecter électriquement l'élément de surface latérale au boîtier, où l'élément de connexion conducteur comprend un élément de commande de courant (520, 620) configuré pour commander un courant appliqué du boîtier à l'élément de surface latérale.

2. Dispositif électronique selon la revendication 1, où l'élément de commande de courant de l'élément de connexion conducteur est configuré pour bloquer ou réduire un courant circulant du boîtier jusque dans l'élément de surface latérale.

3. Dispositif électronique selon la revendication 1, où l'élément de surface latérale est séparé du boîtier dans une zone configurée pour servir de radiateur d'antenne dans le cas où un signal de communication est appliqué de l'élément de circuit à l'alimentateur de puissance.

4. Dispositif électronique selon la revendication 1, où l'élément de connexion conducteur comprend une première plaque métallique (530) située en contact avec l'élément de surface latérale, une deuxième plaque métallique (540) située en contact avec le boîtier, et une carte de circuit (510) qui est disposée entre la première plaque métallique et la deuxième plaque métallique et sur laquelle l'élément de commande de courant est disposé.

5. Dispositif électronique selon la revendication 1, comprenant en outre un élément de renforcement (401) constitué d'un matériau non-métallique et disposé au moins partiellement entre l'élément de surface latérale et le boîtier, où l'élément de renforcement comprend une partie d'assise (402) sur laquelle l'élément de connexion conducteur est disposé.

6. Dispositif électronique selon la revendication 5, comprenant en outre un élément adhésif (P) disposé entre l'élément de renforcement et l'élément de connexion conducteur.

7. Dispositif électronique selon la revendication 1, où l'élément de connexion conducteur comprend une carte de circuit (610) sur laquelle l'élément de commande de courant est disposé, un premier élément de contact (630) constitué d'un matériau conducteur et disposé sur la carte de circuit pour être en contact avec l'élément de surface latérale, et un deuxième élément de contact constitué d'un matériau conducteur et disposé sur la carte de circuit pour être en contact avec le boîtier.

8. Dispositif électronique selon la revendication 1, où l'élément de connexion conducteur comprend une carte de circuit (610) sur laquelle l'élément de commande de courant est disposé et qui comprend un trou de vis (611), un élément de contact (630) constitué d'un matériau conducteur et disposé sur la carte de circuit pour être en contact avec l'élément de surface latérale, et un élément de couplage (S) constitué d'un matériau conducteur et traversant le trou de vis pour être fixé au boîtier.

9. Dispositif électronique selon la revendication 1, où l'élément de surface latérale comprend un film d'oxyde formé sur une surface de celui-ci par un procédé d'anodisation.

10. Dispositif électronique selon la revendication 1, où un écart entre l'alimentateur de puissance et l'élément de connexion conducteur est déterminé en fonction d'une fréquence de fonctionnement d'antenne utilisée par l'élément de surface latérale.

11. Dispositif électronique selon la revendication 1, où le boîtier comprend un premier boîtier (210) et un deuxième boîtier (220) connectés entre eux pour être pliables autour d'un axe de pliage via un dispositif de charnière,
où l'élément de surface latérale comprend un premier élément de surface latérale (213) entourant une surface latérale du premier boîtier tout en étant séparé de la surface latérale du premier boîtier, et un deuxième élément de surface latérale (223) entourant une surface latérale du deuxième boîtier tout en étant séparé de la surface latérale du deuxième boîtier, et
où l'élément de connexion conducteur connecte le premier élément de surface latérale au premier boîtier et connecte le deuxième élément de surface latérale au deuxième boîtier.

12. Structure d'antenne pour un dispositif électronique qui comprend un élément de surface latérale (213, 223, 420) entourant une surface latérale d'un boîtier (210, 220, 410) constitué d'un matériau conducteur et ayant un film d'oxyde sur une surface de celui-ci tout en étant séparé du boîtier, constituant un extérieur du dispositif électronique (101, 200), la structure d'antenne comprenant :
l'élément de surface latérale ;
un alimentateur de puissance (440) de l'élément de surface latérale ;
une carte de circuit imprimé (270) sur laquelle un module de communication (190) est disposé et qui est configurée pour être disposée dans le boîtier ;
un élément de circuit (460) configuré pour connecter électriquement l'alimentateur de puissance de l'élément de surface latérale à la carte de circuit imprimé de sorte qu'un signal de communication généré par le module de communication est transmis à l'élément de surface latérale ; et
un élément de connexion conducteur (500, 600) configuré pour connecter électriquement l'élément de surface latérale au boîtier, où l'élément de connexion conducteur comprend un élément de commande de courant (520, 620) configuré pour contrôler un courant appliqué du boîtier à l'élément de surface latérale.

13. Structure d'antenne selon la revendication 12, où l'élément de surface latérale est séparé du boîtier dans une zone configurée pour servir de radiateur d'antenne dans le cas où un signal de communication est appliqué de l'élément de circuit à l'alimentateur de puissance.

14. Structure d'antenne selon la revendication 12, où l'élément de connexion conducteur comprend une première plaque métallique (530) située en contact avec l'élément de surface latérale, une deuxième plaque métallique (540) située en contact avec le boîtier, et une carte de circuit (510) qui est disposée entre la première plaque métallique et la deuxième plaque métallique et sur laquelle l'élément de commande de courant est disposé.

15. Structure d'antenne selon la revendication 12, où l'élément de connexion conducteur comprend une carte de circuit (610) sur laquelle l'élément de commande de courant est disposé et qui comprend un trou de vis (611), un élément de contact (630) constitué d'un matériau conducteur et disposé sur la carte de circuit pour être en contact avec l'élément de surface latérale, et un élément de couplage (S) constitué d'un matériau conducteur et traversant le trou de vis pour être fixé au boîtier.
